# FASCICULE DE BREVET EUROPEEN

(11) **EP 3 332 527 B1**
(45) Date de publication et mention de la délivrance du brevet: **01.04.2020**
(21) Numéro de dépôt: 16747493.1
(22) Date de dépôt: 02.08.2016
(51) Int. Cl.: H04L 29/06, H04L 12/805, H04L 12/863, H04L 12/851, H04L 12/823, H04L 12/923

(54) **PROCÉDÉ DE TRANSMISSION D'INFORMATION ENTRE DEUX DOMAINES DE NIVEAUX DE SÉCURITÉ DISTINCTS**
VERFAHREN ZUR ÜBERTRAGUNG VON INFORMATIONEN ZWISCHEN ZWEI DOMÄNEN UNTERSCHIEDLICHER SICHERHEITSSTUFEN
METHOD FOR TRANSMITTING INFORMATION BETWEEN TWO DOMAINS OF DIFFERENT SECURITY LEVELS

(30) Priorité: 03.08.2015 FR 1501657
(43) Date de publication de la demande: 13.06.2018
(73) Titulaire: Airbus Defence and Space SAS, 31402 Toulouse Cedex 4 (FR)
(72) Inventeur: CARTIGNY, Marc, 78400 Chatou (FR); KLOTZ, Olivier, 94500 Champigny sur Marne (FR); FRITSCH, Hervé, 92800 Puteaux (FR); POLETTI, Claude, 92260 Fontenay aux Roses (FR)
(74) Mandataire: Cabinet Le Guen Maillet
(86) Numéro de dépôt international: PCT/EP2016/068378
(87) Numéro de publication internationale: WO 2017/021388

(56) Documents cités:
- GB-A- 2 430 834
- US-A1- 2015 215 222

## Description

La présente invention concerne une transmission d'une information à destination d'une première application et/ou d'une seconde application depuis une troisième application, la première application étant exécutée par un premier dispositif d'un premier sous-réseau de type rouge, la seconde application étant exécutée sur un second dispositif d'un second sous-réseau de type rouge, la troisième application étant exécutée par un dispositif d'un réseau de type noir, chaque sous-réseau de type rouge étant de niveau de sécurité supérieur au réseau de type noir, les premier et second sous-réseaux de type rouge étant interconnectés par un tunnel sécurisé via le réseau de type noir et les premier et second sous-réseaux de type rouge appartiennent à un même domaine de sécurité.

Des réseaux de communication peuvent avoir des exigences différentes en termes de sécurité des données qui y transitent. Certains réseaux de communication ayant des exigences fortes en termes de sécurité peuvent avoir recours à d'autres réseaux de communication dans lesquels le niveau d'exigences en termes de sécurité est inférieur, pour faire transiter les données d'un sous-réseau de communication à fortes exigences de sécurité à un autre. On parle de réseau de communication de type rouge pour le réseau de communication de plus haut niveau de sécurité et de réseau de communication de type noir pour le réseau de communication de plus bas niveau de sécurité. Par exemple, un premier groupe de dispositifs d'un premier sous-réseau de communication de type rouge communique avec un second groupe de dispositifs d'un second sous-réseau de communication de type rouge via un réseau de communication de transit non sécurisé ou de niveau de sécurité inférieur à celui de type rouge, dit de type noir. On parle aussi de domaine noir pour désigner le réseau de communication de type noir, et de domaine rouge pour désigner l'ensemble formé par les premier et second sous-réseaux de communication de type rouge. Pour que le premier groupe de dispositifs et le second groupe de dispositifs puissent communiquer de manière sécurisée, des passerelles de sécurité (comme par exemple des chiffreurs réseau) sont mises en œuvre, définissant une frontière entre le domaine noir et le domaine rouge. Ces passerelles de sécurité assurent la confidentialité des communications, par chiffrement/déchiffrement de données devant transiter d'un des sous-réseaux de communication de type rouge vers l'autre des sous-réseaux de communication de type rouge via le réseau de communication de transit de type noir. Ces passerelles de sécurité créent ainsi un tunnel sécurisé de communication à travers le domaine noir, généralement conforme au standard IPSec (*Internet Protocole Security* en anglais). Les sous-réseaux de communication de type rouge forment alors un réseau virtuel privé VPN (*Virtual Private Network* en anglais).

Ainsi, les données issues / à destination de sous-réseaux de communication de type rouge transitant sur le réseau de communication de transit de type noir ne sont pas transmises en clair. En particulier le plan d'adressage réseau et le contenu des communications du domaine rouge sont inaccessibles au sein du domaine noir, ce qui permet de répondre aux exigences en termes de sécurité du domaine rouge.

Une telle architecture de réseaux de communication à plusieurs niveaux de sécurité est mise en œuvre par exemple pour les réseaux de grandes entreprises du secteur de l'énergie dans lesquels les différents sites de production sont reliés au siège de l'entreprise au travers d'un réseau de transit utilisant des infrastructures de communications terrestres à grande capacité de ressources ou des infrastructures radiofréquence à capacité de ressources limitée et variable notamment en raison des conditions météorologiques, comme par exemple des infrastructures de communication par satellite. Dans le cadre d'un réseau de transit utilisant des infrastructures de communication par satellite, la variabilité des conditions de transmission en termes de débit, de latence et de gigue a un impact sur la qualité et la capacité de communication. Aussi, pour assurer la qualité des services de télécommunication de type voix et donnée (*data* en anglais) dans un réseau de communication de domaine rouge, ayant recours à un réseau de transit situé dans un domaine noir pour communiquer entre sous-réseaux distants du domaine rouge, les conditions de transmission du réseau de transit situé dans le domaine noir doivent être prises en compte dans le plan d'admission des services mise en œuvre dans le domaine rouge.

Un inconvénient de ce genre d'infrastructure de communication est que, de par la présence des passerelles de sécurité, il n'existe aujourd'hui pas de solution adéquate pour permettre à un ou plusieurs dispositifs du réseau de communication de transit de type noir de communiquer avec un ou plusieurs dispositifs de l'un ou l'autre des sous-réseaux de communication de type rouge, sans avoir à remettre en cause les exigences de sécurité des sous-réseaux de communication de type rouge, c'est-à-dire sans avoir à créer une brèche de sécurité. De telles informations peuvent être des informations de conditions de transmission dans le réseau de communication de transit de type noir, comme dans l'exemple cité précédemment, ou des commandes, permettant ainsi de coordonner les politiques de qualité de service QoS bout-en-bout (*End-to-End Quality of Service* en anglais) entre le réseau de communication de transit de type noir et les sous-réseaux de communication de type rouge.

Il est connu la demande de brevet GB 2 430 834 A qui traite d'une méthode de routage de paquets chiffrés via un réseau de transit partagé. Un champ non-chiffré d'entête de paquet, destiné à insérer des informations de propagation de paquet, est utilisé pour placer des requêtes de qualité de service QoS.

Il est alors souhaitable, dans ces circonstances, de fournir une solution qui permette à un ou plusieurs dispositifs du domaine noir de communiquer des informations à un ou plusieurs dispositifs du domaine rouge, sans avoir à remettre en cause les exigences de sécurité du domaine rouge.

Il est aussi souhaitable de fournir une solution qui soit compatible avec la plupart des équipements réseau disponibles sur étagère, en particulier avec les équipements réseau de sécurité (*Network Security Equipment* en anglais), et qui n'impose, dans sa mise en œuvre, ni équipement de sécurité ni fonction de sécurité supplémentaire en bordure de domaine de sécurité.

Il est enfin souhaitable de fournir une solution qui soit simple à mettre en œuvre.

L'invention est définie dans les revendications indépendantes. Les modes de réalisation préférés sont définis dans les revendications dépendantes.

L'invention concerne un procédé de transmission d'une information à destination d'une première application et/ou d'une seconde application depuis une troisième application, la première application étant exécutée dans un premier sous-réseau de type rouge et la seconde application dans un second sous-réseau de type rouge, la troisième application étant exécutée dans un réseau de type noir, chaque sous-réseau de type rouge étant de niveau de sécurité supérieur au réseau de type noir, les premier et second sous-réseaux de type rouge étant interconnectés via le réseau de type noir par un tunnel sécurisé entre une première passerelle de sécurité du premier sous-réseau de type rouge et une seconde passerelle de sécurité du second sous-réseau de type rouge appliquant des opérations de chiffrement et de déchiffrement telles que chaque premier paquet de plus petite taille qu'un second paquet résulte après chiffrement en un premier paquet chiffré de taille inférieure ou égale à la taille du paquet résultant du chiffrement du second paquet. Le procédé est tel que : la première application transmet à destination de la seconde application une séquence nominale de paquets, les paquets de ladite séquence nominale étant ordonnés selon un ordonnancement prédéfini en fonction de leurs tailles respectives, et ladite séquence nominale étant telle qu'il est possible de déterminer sans ambiguïté en réception la taille de chaque paquet qui aurait été retiré de ladite séquence ; un équipement réseau du réseau de type noir sur un chemin obligatoire dudit tunnel sécurisé route vers la troisième application chaque paquet de ladite séquence nominale après chiffrement de la première passerelle ; lorsque la troisième application souhaite transmettre ladite information à destination de la première application et/ou de la seconde application, la troisième application effectue des modifications de ladite séquence nominale après chiffrement de la première passerelle, par suppression d'au moins un paquet, chaque paquet supprimé étant fonction de ladite information, et propage les paquets de ladite séquence après chiffrement de la première passerelle qui n'ont pas été supprimés ; lorsque la troisième application ne souhaite pas transmettre d'information à destination de la première application et/ou de la seconde application, la troisième application propage les paquets de ladite séquence nominale après chiffrement de la première passerelle ; sur réception d'une séquence de paquets supposée être la séquence nominale de paquets, la seconde application vérifie si au moins un paquet a été supprimé par la troisième application ; et lorsque la seconde application détecte qu'au moins un paquet a été supprimé par la troisième application, la seconde application retrouve ladite information à partir de la taille de chaque paquet ainsi supprimé de ladite séquence nominale de paquets. Ainsi, en se reposant sur la taille des paquets de ladite séquence nominale, et en permettant à la troisième application de supprimer au moins un de ces paquets sans avoir accès à leur contenu (à cause du chiffrement de la première passerelle), il est possible de faire passer une information de la troisième application (domaine noir) vers la première application et/ou la seconde application (domaine rouge). Dans cette mise en œuvre, ni équipement de sécurité ni fonction de sécurité supplémentaire n'est implémenté en bordure du domaine de sécurité.

Selon un mode de réalisation particulier, la séquence nominale de paquets est délimitée par au moins un paquet de début et au moins un paquet de fin de tailles respectives prédéfinies qui ne sont pas utilisées au sein de ladite séquence nominale de paquets. Ainsi, la séquence nominale de paquets, ayant éventuellement subi des modifications par la troisième application, peut être facilement identifiée.

Selon un mode de réalisation particulier, les paquets de la séquence nominale de paquets sont colorés avec une classe de service prédéfinie, et ledit équipement réseau du réseau de type noir route chaque paquet ainsi coloré, en provenant du premier sous-réseau de type rouge, vers la troisième application. Ainsi, les paquets de ladite séquence nominale de paquets sont aisément routés vers la troisième application.

Selon un mode de réalisation particulier, lorsque la troisième application a transmis ladite information à destination de la première application et/ou de la seconde application, la première application transmet à destination de la seconde application une autre séquence de paquets représentative d'un acquittement positif de réception de ladite information, les paquets de ladite autre séquence étant ordonnés selon un ordonnancement prédéfini en fonction de leurs tailles respectives, et ledit équipement réseau du réseau de type noir route vers la troisième application chaque paquet de ladite autre séquence après chiffrement de la première passerelle. Ainsi, l'information passée de la troisième application vers la première application et/ou la seconde application est acquittée.

Selon un mode de réalisation particulier, la troisième application maintient les modifications pour chaque séquence nominale de paquets qui est reçue ultérieurement, jusqu'à remplir une condition prédéfinie. Ainsi, les éventuelles pertes de paquets entre la troisième application et la seconde application ne sont pas perturbantes.

Selon un mode de réalisation particulier, lorsque la seconde application reçoit une séquence nominale de paquets modifiée, la seconde application attend de recevoir au moins un autre exemplaire de ladite séquence de paquets modifiée avant de déterminer quelle information est transmise par la troisième application à destination de la première application et/ou de la seconde application. Ainsi, la seconde application est apte à distinguer une absence de paquet due à une action délibérée de la troisième application d'une absence de paquet due à une perte entre la troisième application et la seconde application.

Selon un mode de réalisation particulier, chaque information potentiellement à transmettre de la troisième application à la première application et/ou à la seconde application correspond à un code dans une table de correspondance prédéterminée, ladite information correspondant à un code binaire *MI* dans ladite table de correspondance, la troisième application répète les étapes suivantes pour chaque paquet jusqu'à ce que tous les paquets de la séquence nominale de paquets après chiffrement soient traités : récupérer la taille *Tc* dudit paquet ; appliquer une fonction *Fc* à la taille *Tc* récupérée de sorte à obtenir un code binaire *Mc,* la fonction *Fc* étant une fonction bijective telle que, pour une taille de paquet donnée en entrée parmi les tailles possibles de la séquence nominale de paquets après chiffrement, la fonction *Fc* retourne un code binaire avec un unique bit à la valeur « 1 » et les autres bits à la valeur « 0 » ; supprimer ou pas ledit paquet en fonction du résultat d'une opération de ET logique entre les codes binaires *MI* et *Mc ;* et la seconde application répète les étapes suivantes pour chaque paquet jusqu'à ce que tous les paquets de la séquence supposée être la séquence nominale de paquets soient traités : récupérer la taille *T* dudit paquet ; appliquer une fonction *F* à la taille *T* récupérée de sorte à obtenir un code binaire *M,* la fonction *F* est une fonction bijective telle que, pour une taille de paquet donnée en entrée parmi les tailles possibles de la séquence nominale de paquets, la fonction *F* retourne un code binaire avec un unique bit à la valeur « 1 » et les autres bits à la valeur « 0 », et en outre telle que, pour un paquet de taille *T* résultant après chiffrement par la première passerelle de sécurité en un paquet de taille *Tc, F(T)=Fc(Tc)* ; et mettre à jour une variable *MI',* initialisée à la valeur « 0 » pour le tout premier paquet de la séquence supposée être la séquence nominale de paquets, avec le résultat d'une opération de OU logique entre le code binaire *M* et la variable *MI'* ; et la variable *MI'* donne un code binaire représentatif de ladite information au sein de la table de correspondance précédemment évoquée. Ainsi, encoder et décoder ladite information sont des opérations simples.

Selon un mode de réalisation particulier, ladite information est représentative d'une commande de changement d'état dans une machine d'états. Ainsi, il est aisé de contrôler des progressions de machines d'état, malgré la présence de domaines de niveaux de sécurité distincts.

Selon un mode de réalisation particulier, une taille particulière de paquet est représentative d'une action de passage à un état précédent dans une liste ordonnée prédéfinie des états de la machine d'état, et la première application transmet au moins deux paquets de cette taille particulière dans la séquence nominale de paquets, cette taille particulière n'étant pas utilisée dans le reste de la séquence nominale, et la troisième application supprime une quantité x de paquets de ladite taille particulière au sein de ladite séquence nominale après chiffrement de la première passerelle pour représenter un passage à un état de rang *N-x.* Ainsi, de plus grandes machines d'états peuvent être contrôlées.

Selon un mode de réalisation particulier, une phase d'initialisation est préalablement implémentée comme suit : la première application transmet à destination de la seconde application une séquence de test consistant en un enchaînement prédéfini de l'ensemble des tailles de paquets utilisables pour générer ladite séquence nominale de paquets, chaque paquet de la séquence de test ayant une taille différente et lesdits paquets sont ordonnés par taille croissante ou décroissante ; ledit équipement réseau du réseau de type noir route vers la troisième application chaque paquet de ladite séquence de test après chiffrement de la première passerelle ; la troisième application supprime chaque doublon de taille dans la séquence de test après chiffrement de la première passerelle et propage la séquence de test ainsi modifiée vers la seconde application ; et lorsque la seconde application reçoit une séquence de paquets supposée être la séquence de test, la seconde application détermine les tailles de paquets qui n'ont pas été supprimés par la troisième application, ces tailles de paquets pouvant alors être distinctement utilisées pour générer ladite séquence nominale de paquets, et en informe la première application. Ainsi, il est possible de détecter que la première passerelle insère des données de bourrage (*padding data* en anglais) lors des opérations de chiffrement, de sorte que deux paquets de tailles distinctes transmis par la première application se retrouvent avec une même taille après chiffrement.

Selon un mode de réalisation particulier, les paquets de la séquence de test sont colorés avec une classe de service prédéfinie, et ledit équipement réseau du réseau de type noir route chaque paquet ainsi coloré, en provenant du premier sous-réseau de type rouge, vers la troisième application. Ainsi, les paquets de ladite séquence de test sont aisément routés vers la troisième application.

Selon un mode de réalisation particulier, la phase d'initialisation est préalablement comme suit : la première application transmet à destination de la seconde application une séquence d'initialisation constituée d'un enchaînement remarquable de paquets, la taille de chaque paquet de la séquence d'initialisation est soit égale à une taille maximale sans fragmentation dans les premier et second sous-réseaux de type rouge, soit égale à une taille minimale de paquet dans les premier et second sous-réseaux de type rouge ; et ledit équipement réseau du réseau de type noir route vers la troisième application chaque paquet de ladite séquence d'initialisation après chiffrement de la première passerelle. Ainsi, il est possible de déclencher la phase d'initialisation sans savoir *a priori* si et comment la première passerelle insère des données de bourrage lors des opérations de chiffrement.

Selon un mode de réalisation particulier, les paquets de la séquence d'initialisation sont colorés avec une classe de service prédéfinie, et ledit équipement réseau du réseau de type noir route chaque paquet ainsi coloré, en provenant du premier sous-réseau de type rouge, vers la troisième application. Ainsi, les paquets de ladite séquence d'initialisation sont aisément routés vers la troisième application.

Selon un mode de réalisation particulier, chaque information potentiellement à transmettre de la troisième application à la première application et/ou à la seconde application correspond à un code dans une table de correspondance prédéterminée, et : la première application transmet à destination de la seconde application une séquence de paquets représentative d'une table de correspondance sélectionnée parmi un ensemble prédéfini de tables de correspondance en fonction des tailles de paquets qui n'ont pas été supprimés par la troisième application au sein de la séquence de test, et ladite séquence de paquets représentative de la table de correspondance sélectionnée comporte un premier ensemble de paquets représentatif de la table de correspondance sélectionnée et un second ensemble destiné à permettre à la troisième application d'en effectuer un acquittement par suppression d'au moins un paquet dudit second ensemble, la taille de chaque paquet de la séquence de paquets représentative de la table de correspondance sélectionnée est soit égale à la taille maximale sans fragmentation dans les premier et second sous-réseaux de type rouge, soit égale à la taille minimale de paquet dans les premier et second sous-réseaux de type rouge ; et ledit équipement réseau du réseau de type noir route vers la troisième application chaque paquet de ladite séquence de paquets représentative de la table de correspondance sélectionnée après chiffrement de la première passerelle. Ainsi, la table de correspondance à appliquer pour permettre à la troisième application de passer ladite information à la première application et/ou à la seconde application est aisément partagée entre lesdites première, seconde et troisième applications.

L'invention concerne également un système de transmission d'une information à destination d'une première application et/ou d'une seconde application depuis une troisième application, la première application étant exécutée dans un premier sous-réseau de type rouge et la seconde application dans un second sous-réseau de type rouge, la troisième application étant exécutée dans un réseau de type noir, chaque sous-réseau de type rouge étant de niveau de sécurité supérieur au réseau de type noir, les premier et second sous-réseaux de type rouge étant interconnectés via le réseau de type noir par un tunnel sécurisé entre une première passerelle de sécurité du premier sous-réseau de type rouge et une seconde passerelle de sécurité du second sous-réseau de type rouge appliquant des opérations de chiffrement et de déchiffrement telles que chaque premier paquet de plus petite taille qu'un second paquet résulte après chiffrement en un premier paquet chiffré de taille inférieure ou égale à la taille du paquet résultant du chiffrement du second paquet. Le système est tel que : la première application est adaptée pour transmettre à destination de la seconde application une séquence nominale de paquets, les paquets de ladite séquence nominale étant ordonnés selon un ordonnancement prédéfini en fonction de leurs tailles respectives, et ladite séquence nominale étant telle qu'il est possible de déterminer sans ambiguïté en réception la taille de chaque paquet qui aurait été retiré de ladite séquence ; un équipement réseau du réseau de type noir sur un chemin obligatoire dudit tunnel sécurisé est adapté pour router vers la troisième application chaque paquet de ladite séquence nominale après chiffrement de la première passerelle ; lorsque la troisième application souhaite transmettre ladite information à destination de la première application et/ou de la seconde application, la troisième application est adaptée pour effectuer des modifications de ladite séquence nominale après chiffrement de la première passerelle, par suppression d'au moins un paquet, chaque paquet supprimé étant fonction de ladite information, et pour propager les paquets de ladite séquence après chiffrement de la première passerelle qui n'ont pas été supprimés ; lorsque la troisième application ne souhaite pas transmettre d'information à destination de la première application et/ou de la seconde application, la troisième application est adaptée pour propager les paquets de ladite séquence nominale après chiffrement de la première passerelle ; sur réception d'une séquence de paquets supposée être la séquence nominale de paquets, la seconde application est adaptée pour vérifier si au moins un paquet a été supprimé par la troisième application ; et lorsque la seconde application détecte qu'au moins un paquet a été supprimé par la troisième application, la seconde application est adaptée pour retrouver ladite information à partir de la taille de chaque paquet ainsi supprimé de ladite séquence nominale de paquets.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel la présente invention peut être mise en œuvre, le système de communication comportant un premier sous-réseau de communication de type rouge et un second sous-réseau de communication de type rouge interconnectés par un réseau de communication de type noir ;
- la Fig. 2 illustre schématiquement un exemple d'architecture matérielle de dispositifs du système de communication ;
- la Fig. 3 illustre schématiquement un algorithme, mis en œuvre par une première application, localisée dans le premier sous-réseau de communication de type rouge, pour permettre à ladite première application, à l'aide d'une seconde application, localisée dans le second sous-réseau de communication de type rouge, de recevoir des informations d'une troisième application, localisée dans le réseau de communication de type noir ;
- la Fig. 4 illustre schématiquement un algorithme, mis en œuvre par ladite troisième application, pour permettre à ladite première application de recevoir des informations de ladite troisième application, à l'aide de ladite seconde application ;
- la Fig. 5 illustre schématiquement un algorithme, mis en œuvre par ladite seconde application, pour permettre à ladite première application de recevoir des informations de ladite troisième application, à l'aide de ladite seconde application ;
- les Figs. 6A, 6B et 6C illustrent schématiquement des séquences de paquets apparaissant dans des échanges intervenant dans le cadre de l'exécution des algorithmes des Figs. 3 à 5 ;
- la Fig. 7 illustre schématiquement une machine d'états, qui peut être contrôlée ou surveillée, grâce à l'exécution des algorithmes des Figs. 3 à 5 ;
- les Figs. 8A et 8B illustrent schématiquement des séquences de paquets apparaissant dans des échanges intervenant dans le cadre du contrôle, ou de la surveillance, de la machine d'états de la Fig. 7 ;
- la Fig. 9 illustre schématiquement un algorithme, mis en œuvre par ladite première application, dans le cadre d'une phase d'initialisation ;
- la Fig. 10 illustre schématiquement un algorithme, mis en œuvre par ladite troisième application, dans le cadre de la phase d'initialisation ; et
- la Fig. 11 illustre schématiquement un algorithme, mis en œuvre par ladite seconde application, dans le cadre de la phase d'initialisation.

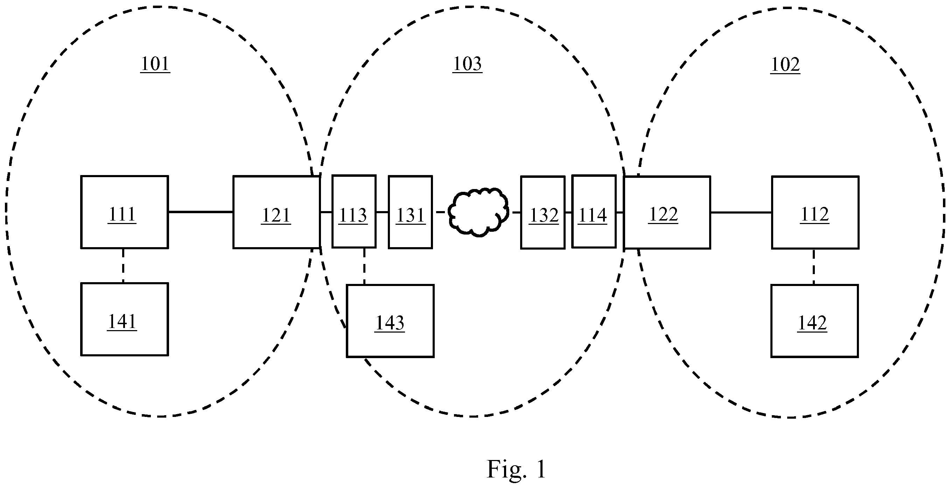

La **Fig. 1** illustre schématiquement un système de communication dans lequel la présente invention peut être mise en œuvre. Le système de communication est un système de communication par paquets, reposant préférentiellement sur la technologie IP (*Internet Protocol* en anglais).

Le système de communication comporte un premier sous-réseau de communication 101 de type rouge et un second sous-réseau de communication 102 de type rouge interconnectés par un réseau de communication 103 de type noir.

Le réseau de communication 103 de type noir est donc de plus faible niveau de sécurité que les premier 101 et second 102 sous-réseaux de communication de type rouge. Le réseau de communication 103 de type noir comporte des équipements réseau (*network equipment items* en anglais) 113, 114, 131, 132 permettant de mettre en communication les premier 101 et second 102 sous-réseaux de communication de type rouge. Par exemple, les équipements réseau 113, 114 sont des routeurs assurant un routage de paquets au sein du réseau de communication 103 de type noir, et les équipements réseau 131, 132 sont des dispositifs émetteurs-récepteurs (*transceiver devices* en anglais) communiquant l'un avec l'autre via une liaison satellite. Les équipements émetteurs-récepteurs incluent alors respectivement des modems et des antennes permettant de mettre en œuvre la liaison satellite. D'autres types de technologies de communication peuvent être mis en œuvre pour mettre en communication les premier 101 et second 102 sous-réseaux de communication de type rouge, que ces technologies soient filaires ou sans-fil. Les équipements réseau 113, 114, 131, 132 agissent préférentiellement au niveau trois du modèle OSI et plus particulièrement au niveau IP.

Le premier sous-réseau de communication 101 de type rouge inclut une première passerelle de sécurité 121 et un premier équipement réseau (*network equipment* en anglais) 111. Le premier équipement réseau 111 est par exemple un routeur assurant un routage de paquet en provenance du premier sous-réseau de communication 101 de type rouge et de paquets à destination du premier sous-réseau de communication 101 de type rouge. Tout routeur agissant au niveau trois du modèle OSI, le premier équipement réseau 111 est préférentiellement un routeur IP.

Le second sous-réseau de communication 102 de type rouge inclut une seconde passerelle de sécurité 122 et un second équipement réseau 112. Le second équipement réseau 112 est par exemple un routeur assurant un routage de paquets en provenance du second sous-réseau de communication 102 de type rouge et de paquets à destination du second sous-réseau de communication 102 de type rouge. Le second équipement réseau 111 est préférentiellement un routeur IP.

La première passerelle de sécurité 121 et la seconde passerelle de sécurité 122 sont adaptées pour mettre en place un tunnel sécurisé entre le premier sous-réseau de communication 101 de type rouge et le second sous-réseau de communication 102 de type rouge via le réseau de communication 103 de type noir. Ainsi, pour chaque paquet transmis par un dispositif du premier sous-réseau de communication 101 de type rouge à destination d'un dispositif du second sous-réseau de communication 102 de type rouge, la première passerelle de sécurité 121 applique une opération de chiffrement avant envoi via le réseau de communication 103 de type noir. Et, pour chaque paquet chiffré reçu via le réseau de communication 103 de type noir, la seconde passerelle de sécurité 122 applique une opération de déchiffrement avant de propager ledit paquet via le second sous-réseau de communication 102 de type rouge. De manière symétrique, pour chaque paquet transmis par un dispositif du second sous-réseau de communication 102 de type rouge à destination d'un dispositif du premier sous-réseau de communication 101 de type rouge, la seconde passerelle de sécurité 122 applique une opération de chiffrement avant envoi via le réseau de communication 103 de type noir. Et, pour chaque paquet chiffré reçu via le réseau de communication 103 de type noir, la première passerelle de sécurité 121 applique une opération de déchiffrement avant de propager ledit paquet via le premier sous-réseau de communication 101 de type rouge. Un tunnel sécurisé est ainsi établi entre la première passerelle de sécurité 121 et la seconde passerelle de sécurité 122.

Ainsi, selon un exemple illustratif représenté sur la Fig. 1, l'équipement réseau 113 du domaine noir est connecté à la première passerelle de sécurité 121 (définissant la frontière entre le premier sous-réseau de communication 101 de type rouge et le domaine noir) et l'équipement réseau 114 du domaine noir est connecté à la première passerelle de sécurité 122 (définissant la frontière entre le second sous-réseau de communication 102 de type rouge et le domaine noir). L'équipement réseau 113 est en outre connecté à l'équipement réseau 131 et l'équipement réseau 114 est en outre connecté à l'équipement réseau 132 (l'équipement réseau 131 et l'équipement réseau 132 étant interconnectés, par exemple via une liaison satellite), permettant ainsi de mettre en communication sécurisée les sous-réseaux de communication 101 et 102 de type rouge via le réseau de communication 103 de type noir agissant en tant que réseau de transit.

Le système de communication présenté à la Fig. 1 est ainsi par exemple adapté pour mettre en œuvre des communications sécurisées de type VoIP (*Voice over IP* en anglais) entre un terminal téléphonique du premier sous-réseau de communication 101 de type rouge et un autre terminal téléphonique du second sous-réseau de communication 102 de type rouge. Le système de communication présenté à la Fig. 1 est ainsi par exemple adapté pour mettre en œuvre des communications sécurisées de type données (*data* en anglais).

Le premier sous-réseau de communication 101 de type rouge comporte en outre une première application 141, c'est-à-dire un module de communication agissant au niveau sept du modèle OSI, à savoir la couche du modèle OSI la plus proche de « l'utilisateur » (au sens large) et qui fournit des services réseau à « l'utilisateur ». La première application 141 peut être implémentée par un dispositif du premier sous-réseau de communication 101 de type rouge connecté au premier équipement réseau 111. En variante, la première application 141 peut être implémentée par le premier équipement réseau 111. De manière similaire, le second sous-réseau de communication 102 de type rouge comporte en outre une seconde application 142, c'est-à-dire un module de communication agissant au niveau sept du modèle OSI. La seconde application 142 peut être implémentée par un dispositif du second sous-réseau de communication 102 de type rouge qui est connecté au second équipement réseau 112. En variante, la seconde application 142 peut être implémentée par le second équipement réseau 112. De plus, le réseau de communication 103 de type noir comporte en outre une troisième application 143, c'est-à-dire un module de communication agissant au niveau sept du modèle OSI. La troisième application 143 peut être implémentée par un dispositif du réseau de communication 103 de type noir qui est connecté aux équipements réseau 131, 132 (dans le réseau de communication 103 de type noir, tout dispositif est directement ou indirectement connecté aux équipements réseau 131, 132). En variante, la troisième application 143 peut être implémentée par l'un ou l'autre des équipements réseau 131, 132.

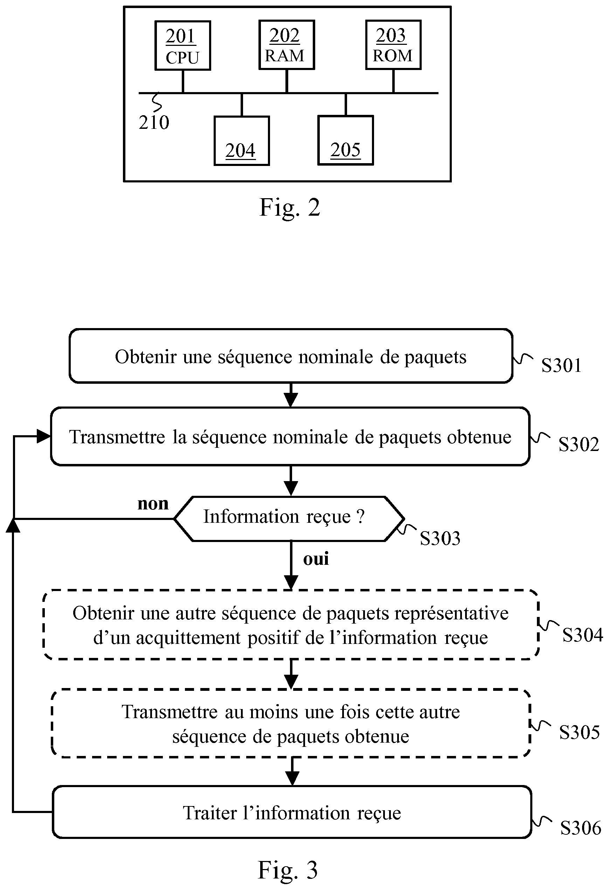

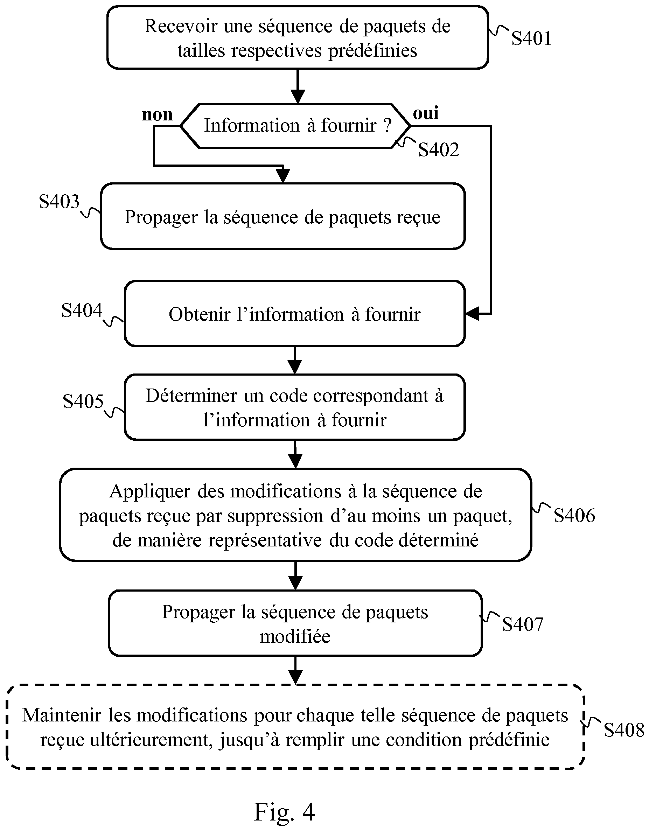

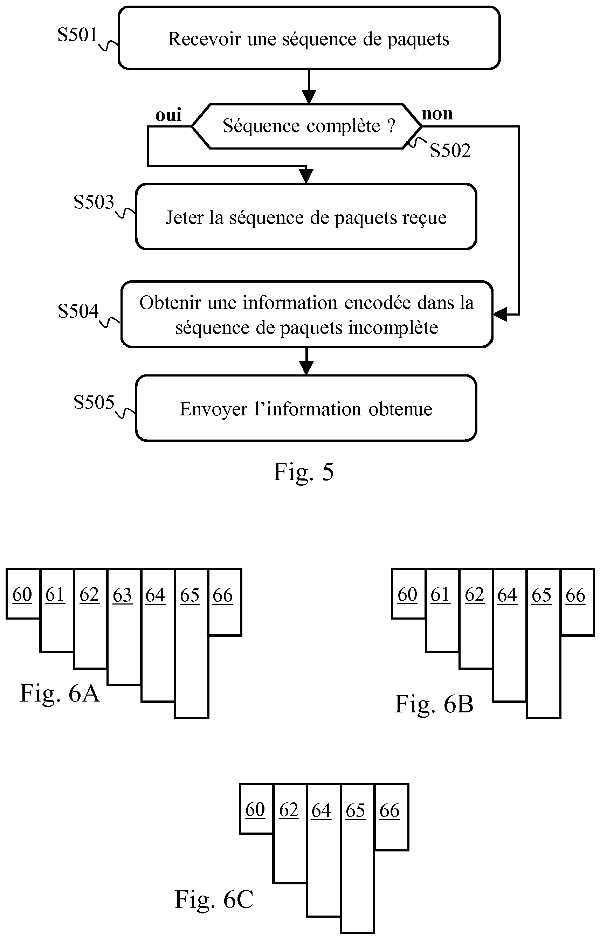

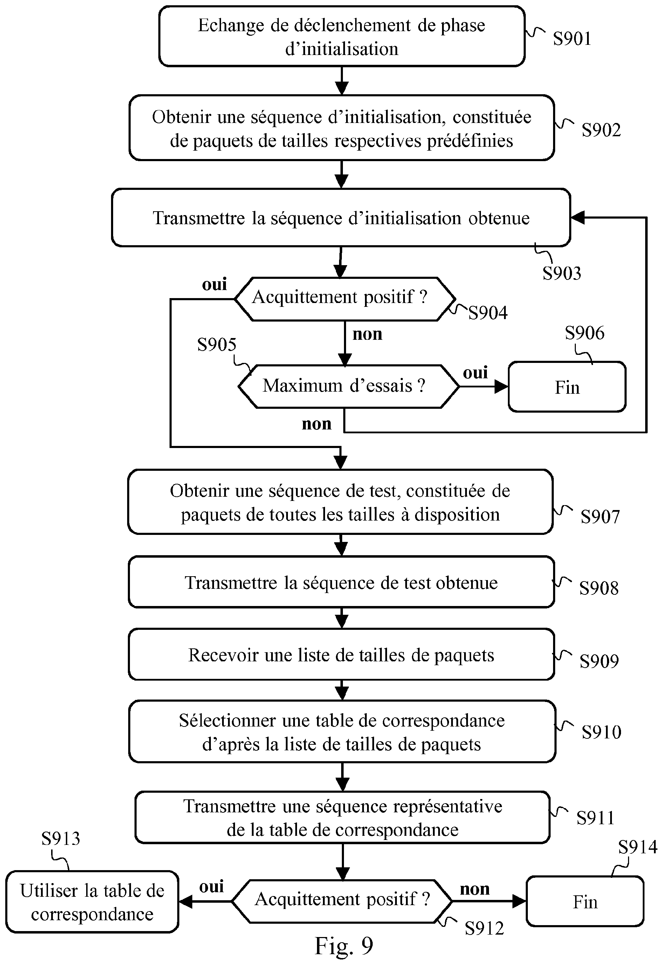

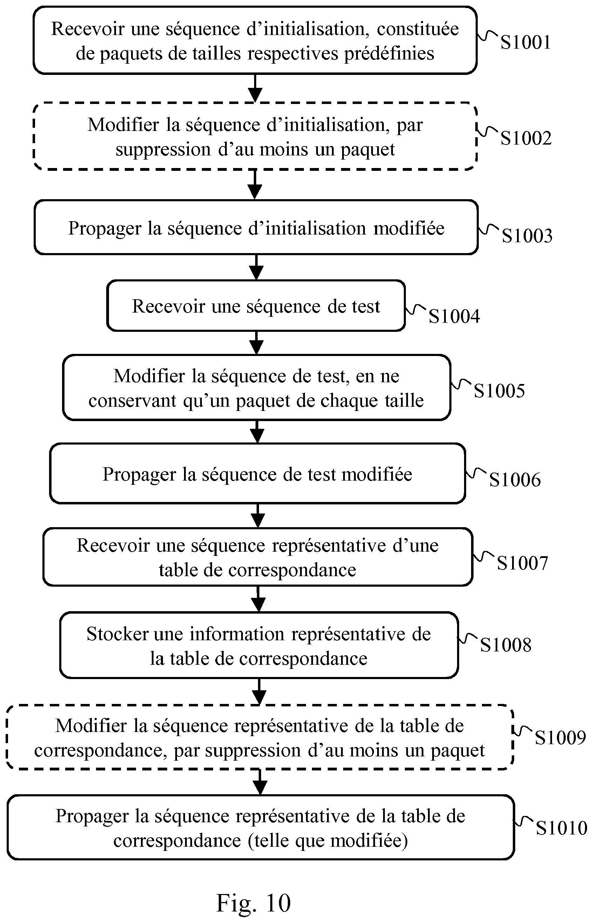

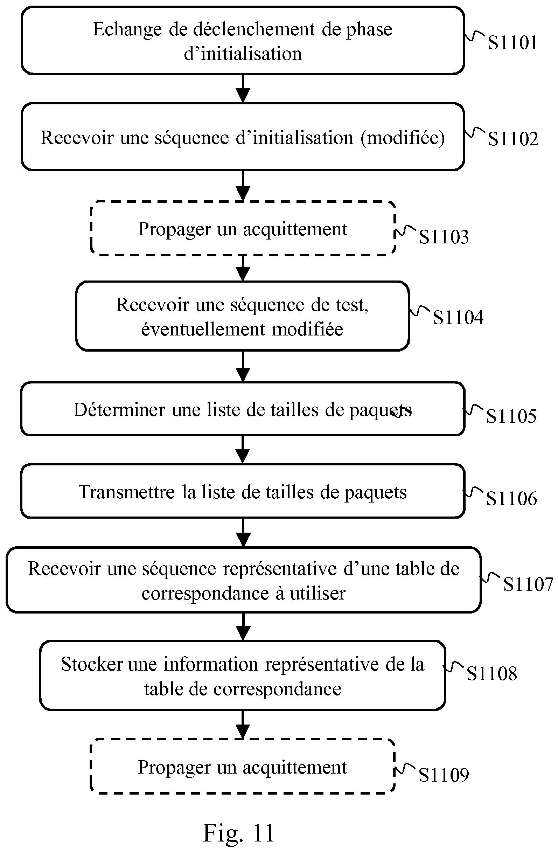

Les première 141, seconde 142 et troisième 143 applications interagissent de manière à permettre à la troisième application de transmettre des informations à la première application 141 et/ou à la seconde application 142 (c'est-à-dire au domaine rouge), malgré la présence des première 121 et seconde 122 passerelles de sécurité. Dans ce cadre, le comportement de la première application 141 est décrit ci-après en relation avec la Fig. 3, le comportement de la seconde application 142 est décrit ci-après en relation avec la Fig. 5 et le comportement de la troisième application 143 est décrit ci-après en relation avec la Fig. 4. Dans un mode de réalisation particulier, les première 141, seconde 142 et troisième 143 applications mettent en œuvre une phase d'initialisation. Dans ce cadre, le comportement de la première application 141 est décrit ci-après en relation avec la Fig. 9, le comportement de la seconde application 142 est décrit ci-après en relation avec la Fig. 11 et le comportement de la troisième application 143 est décrit ci-après en relation avec la Fig. 10.

La **Fig.2** illustre schématiquement un exemple d'architecture matérielle de dispositifs du système de communication. Plus particulièrement, la Fig. 2 illustre schématiquement un exemple d'architecture matérielle adaptée à l'implémentation des première 141, seconde 142 et troisième 143 applications. Considérons à titre illustratif que l'exemple d'architecture matérielle représenté schématiquement à la Fig. 2 correspond à une machine sur laquelle est exécutée la première application 141.

La machine sur laquelle est exécutée la première application 141 inclut alors, reliés par un bus de communication 210 : un processeur ou CPU (*Central Processing Unit* en anglais) 201 ; une mémoire vive RAM (*Random Access Memory* en anglais) 202 ; une mémoire morte ROM (*Read Only Memory* en anglais) 203 ; une unité de stockage 204 ou un lecteur de support de stockage, tel qu'un lecteur de cartes SD (*Secure Digital* en anglais) ou un disque dur HDD (*Hard Disk Drive* en anglais) ; et au moins une interface 205 permettant à la machine sur laquelle est exécutée la première application 141 de communiquer au sein du système de communication.

Le processeur 201 est capable d'exécuter des instructions chargées dans la RAM 202 à partir de la ROM 203, ou d'une mémoire externe, ou d'un support de stockage, ou d'un réseau de communication. Lorsque la machine sur laquelle est exécutée la première application 141 est mise sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ci-après en relation avec la première application 141. Il en va de même pour la machine sur laquelle est exécutée la seconde application 142 et la machine sur laquelle est exécutée la troisième application 143.

Tout ou partie des algorithmes et étapes décrits ci-après peut ainsi être implémenté sous forme logicielle par exécution d'un ensemble d'instructions par une machine programmable, tel qu'un DSP (*Digital Signal Processor* en anglais) ou un microcontrôleur, ou être implémenté sous forme matérielle par une machine ou un composant dédié, tel qu'un FPGA (*Field-Programmable Gate Array* en anglais) ou un ASIC (*Application-Specific Integrated Circuit* en anglais).

La **Fig. 3** illustre schématiquement un algorithme, mis en œuvre par la première application 141, pour permettre à ladite première application 141 de recevoir des informations de la part de la troisième application 143, à l'aide de la seconde application 142.

Dans une étape S301, la première application 141 obtient une séquence de paquets de tailles respectives prédéfinies. Cette séquence de paquets est appelée par la suite *séquence nominale de paquets,* car c'est la séquence de paquets qui est supposée passer telle quelle du premier sous-réseau de communication 101 de type rouge au second sous-réseau de communication 102 de type rouge lorsque la troisième application 143 n'a pas d'information à fournir au domaine rouge. Dans la séquence nominale de paquets, les paquets sont ordonnés selon un ordonnancement prédéfini en fonction de leurs tailles respectives, et cet ordonnancement est connu des première 141, seconde 142 et troisième 143 applications. La séquence nominale de paquets est telle que, lorsqu'un ou plusieurs paquets sont retirés de ladite séquence nominale de paquets, il est possible de déterminer sans ambiguïté en réception quel ou quels paquets ont été retirés et plus particulièrement quelle taille avait chaque paquet ainsi retiré. Comme il sera apparent à la lecture de la description qui suit, ce qui importe pour permettre à la troisième application 143 de faire passer des informations au domaine rouge est la taille des paquets propagés dans le système de communication plus que leurs contenus respectifs (étant donné que les première 121 et seconde 122 passerelles de sécurité effectuent des opérations de chiffrement et de déchiffrement).

Le contenu des paquets de la séquence nominale de paquets n'a pas d'importance dans le cadre de la présente invention. En effet, ce qui importe est la taille de ces paquets. Il en va de même pour les autres séquences de paquets transmises depuis la première application 141 à destination de la seconde application 142 destinées à permettre à la troisième application 143 de fournir une information au domaine rouge par suppression d'au moins un paquet de ladite séquence. Ainsi, les paquets des ces séquences peuvent contenir des données fictives (*dummy data* en anglais), c'est-à-dire que les séquences sont créées spécifiquement pour le besoin de faire passer une information du domaine noir au domaine rouge sans que les paquets concernés ne contiennent de données utiles. Dans une variante de réalisation, les paquets des ces séquences peuvent contenir des données à transmettre du premier sous-réseau de communication 101 de type rouge au second sous-réseau de communication 102 de type rouge (le chiffrement effectué par la passerelle de sécurité 121 empêchant tout dispositif du domaine noir d'avoir accès au contenu effectif de ces paquets).

Selon un mode de réalisation préférentiel, la séquence nominale de paquets est constituée d'une succession de paquets ordonnancés par taille croissante. Alternativement, la séquence nominale de paquets est constituée d'une succession de paquets ordonnancés par taille décroissante. Tout autre ordonnancement prédéfini et connu des première 141, seconde 142 et troisième 143 applications est applicable.

Selon un mode de réalisation préférentiel, la séquence nominale de paquets est délimitée par au moins un paquet de début et par au moins un paquet de fin, de tailles respectives prédéfinies. Les tailles des paquets de début et de fin sont connues des première 141, seconde 142 et troisième 143 applications, et ne sont pas utilisées au sein de ladite séquence nominale de paquets. Un exemple de séquence nominale de paquets comportant de tels paquets de début et de fin est présenté ci-après en relation avec la Fig. 6A. Dans une variante de réalisation, la première application 141 transmet la séquence nominale de paquets au cours de périodes temporelles prédéfinies (*e.g*. régulièrement) et connues des seconde 142 et troisième 143 applications.

Dans une étape S302 suivante, la première application 141 transmet, à destination de la seconde application 142, la séquence nominale de paquets obtenue à l'étape S301. Les paquets de la séquence nominale de paquets obtenue à l'étape S301 sont transmis en s'appuyant sur un protocole de transport sans acquittement ni retransmission en cas de perte. Dans un mode de réalisation préféré, les paquets de la séquence nominale de paquets sont transmis en s'appuyant sur le protocole UDP (*User Datagram Protocol* en anglais), tel que défini par la norme RFC 768.

La séquence nominale de paquets (après chiffrement) est destinée à être interceptée par la troisième application 143. Un équipement réseau du domaine noir sur un chemin obligatoire du tunnel sécurisé depuis le premier sous-réseau de communication 101 de type rouge jusqu'au second sous-réseau de communication 102 de type rouge, comme par exemple l'équipement réseau 113, est adapté pour discriminer les paquets de la séquence nominale de paquets (après chiffrement) parmi les paquets transportés dans le domaine noir et pour router lesdits paquets jusqu'à la troisième application 143.

Les paquets de ladite séquence nominale sont alors reçus par la passerelle de sécurité 121 qui procède alors à un chiffrement desdits paquets. Cette opération de chiffrement modifie en général la taille des paquets. Cependant, un premier paquet de plus petite taille qu'un second paquet résulte en un premier paquet chiffré de taille en général moindre que (et au plus égale à) la taille du paquet résultant du chiffrement du second paquet. Dans le cas où le chiffrement de deux paquets de tailles différentes peut mener à deux paquets chiffrés respectifs de même taille, les première 141, seconde 142 et troisième 143 applications mettent préférentiellement en place une phase d'initialisation telle que décrite ci-après en relation avec les Figs. 9 à 11. Les différentes tailles des paquets de ladite séquence nominale sont telles que le chiffrement desdits paquets par la passerelle de sécurité 121 génère des paquets chiffrés respectifs de tailles distinctes. Après chiffrement, les paquets de ladite séquence nominale sont transmis dans le domaine noir, et y sont routés afin que la troisième application 143 puisse traiter lesdits paquets comme décrit ci-après en relation avec la Fig. 5.

Dans un mode de réalisation particulier, la séquence nominale de paquets est colorée avec une classe de service CoS (*Class of Service* en anglais) dédiée, *e.g.* en utilisant un code de classe de service DSCP (*DiffServ CodePoint* en anglais, tel que défini dans le document normatif RFC 2474) dédié. Préférentiellement, la séquence nominale de paquets est colorée avec la classe de service CoS de plus forte priorité parmi les classes de service CoS non utilisées dans le plan de qualité de service QoS mis en œuvre dans le système de communication (préférentiellement, en utilisant un code de classe de service DSCP de niveau CS5 ou d'ordre supérieur), afin de réduire les latences de transport subies par la séquence nominale de paquets et diminuer les risques de pertes de paquets au sein de la séquence nominale de paquets). Cette classe de service CoS bénéficie dans le plan de QoS d'une politique d'acheminement garanti au titre la signalisation réseau, afin d'éliminer les risques de pertes de paquets liées aux mécanismes de QoS au sein de ladite séquence nominale de paquets. Les informations de classe de service CoS sont typiquement recopiées dans un entête en clair par les passerelles de sécurité 121, 122 (afin de permettre au domaine noir de mettre en œuvre une politique de gestion de trafic basée sur les classes de services CoS des paquets transportés dans le domaine noir). Une autre approche consiste à utiliser des adresses de routage, au niveau des passerelles de sécurité 121 et 122, qui sont spécifiques pour la séquence nominale de paquets (tunnel spécifique), et qui sont connues des équipements réseau du domaine noir devant router les paquets de ladite séquence nominale via la troisième application 143. Les paquets de ladite séquence nominale peuvent donc être aisément discriminés des autres paquets transportés dans le domaine noir.

Dans une étape S303 suivante, la première application 141 se met en attente d'une information en provenance de la troisième application 143, par l'intermédiaire de la seconde application 142. Cet aspect est détaillé ci-après en relation avec les Figs. 4 et 5. Si dans un laps de temps prédéterminé, aucune information en provenance de la troisième application 143 n'est reçue par l'intermédiaire de la seconde application 142, l'étape S302 est réitérée avec un nouvel envoi de ladite séquence nominale de paquets. Sinon, une étape S306 est effectuée, dans laquelle ladite information est traitée par la première application 141. La première application 141 peut alors propager ladite information à une station de gestion réseau NMS (*Network Management Station* en anglais), en charge de mettre en œuvre des mécanismes FCAPS (*Fault, Configuration, Administration, Performance, Security* en anglais) pour le domaine rouge, selon le modèle ISO *(International Organization for Standardization* en anglais) de gestion de réseau. Dans un mode de réalisation particulier, ladite information est représentative de conditions de transmission dans le domaine noir (*e.g*. indication de congestion). Dans un autre mode de réalisation particulier, ladite information est représentative d'une commande à appliquer par la première application 141 ou par la station de gestion réseau NMS, voire une commande de changement d'état dans une machine d'états mise en œuvre dans le domaine rouge (*e.g.* par la première application 141 ou par la station de gestion réseau NMS du domaine rouge). Un exemple de telles commandes peut être la mise en œuvre d'un plan de qualité de service QoS de repli, consistant à ajuster une admission de service (*e.g*. fermeture/ouverture de certaines interfaces physiques et/ou de certains ports, limitation du trafic de type FTP (*File Transfer Protocol* en anglais) ou HTTP (*HyperText Transport Protocol* en anglais), réduction d'un nombre d'appels vocaux simultanés autorisés,...), ce plan qualité de service QoS de repli s'appliquant à tout ou partie de l'ensemble des équipements réseaux aux interfaces avec le domaine noir. Dans un autre mode de réalisation particulier, ladite information est une information de changement d'état dans une machine d'états mise en œuvre dans le domaine noir (*e.g.* par la troisième application 143).

Dans un mode de réalisation en variante, lorsqu'une information en provenance de la troisième application 143 est reçue par l'intermédiaire de la seconde application 142, la première application 141 effectue une étape S304 dans laquelle la première application 141 obtient, en fonction de l'information reçue à l'étape S303, une autre séquence de paquets de tailles prédéfinies, cette autre séquence de paquets étant représentative d'un acquittement positif de la réception par la première application 141 de ladite information en provenance de la troisième application 143. Comme pour la séquence nominale de paquets, les paquets sont ordonnés selon un ordonnancement prédéfini en fonction de leurs tailles respectives, et cet ordonnancement est connu des première 141, seconde 142 et troisième 143 applications. Comme détaillé par la suite, la troisième application 143 génère ladite information par suppression d'au moins un paquet de la séquence nominale de paquets (telle qu'obtenue après chiffrement) ; cette séquence modifiée de paquets est représentative de l'information que la troisième application 143 souhaite fournir au domaine rouge. Ainsi, dans un mode de réalisation particulier, la séquence de paquets obtenue par la première application 141 à l'étape S304 est la même que la séquence nominale de paquets telle que reçue par la seconde application 142 après modification par la troisième application 143 pour faire passer ladite information au domaine rouge.

Par exemple, supposons que la séquence nominale de paquets soit une succession de cinq paquets de tailles respectives T1, T2, T3, T4, T5. Après chiffrement, la séquence nominale de paquets devient une succession de cinq paquets de tailles respectives TC1, TC2, TC3, TC4, TC5. Supposons aussi que la troisième application supprime le paquet de taille TC3 pour fournir une information au domaine rouge. Après déchiffrement, la séquence modifiée de paquets devient une succession de quatre paquets de tailles respectives T1, T2, T4, T5. La seconde application 142 utilise une table de correspondance (*look-up table* en anglais) prédéterminée, pour déterminer à quelle information correspond la succession des quatre paquets de tailles respectives T1, T2, T4, T5 reçus. La seconde application 142 transmet alors ladite information à la première application 141. La première application 141 génère alors la séquence de paquets à l'étape S304 de sorte à consister en une succession de quatre paquets de tailles respectives T1, T2, T4, T5. Les seconde 142 et troisième 143 applications sont alors informées d'un acquittement positif, indiquant que ladite information a bien été reçue par ladite première application 141.

Comme pour la séquence nominale de paquets transmise à l'étape S302, la séquence de paquets obtenue à l'étape S304 est destinée à être interceptée par la troisième application 143. Un équipement réseau du domaine noir sur le chemin de transit depuis le premier sous-réseau de communication 101 de type rouge jusqu'au second sous-réseau de communication 102 de type rouge, comme par exemple l'équipement réseau 113, est adapté pour discriminer les paquets de la séquence de paquets obtenue à l'étape S304 (après chiffrement) parmi les paquets transportés dans le domaine noir et pour router lesdits paquets jusqu'à la troisième application 143.

Dans un mode de réalisation particulier, la séquence de paquets obtenue à l'étape S304 est colorée avec une classe de service CoS dédiée, *e.g.* en utilisant un code de classe de service DSCP dédié. Préférentiellement, la séquence de paquets obtenue à l'étape S304 est colorée avec la même classe de service CoS que la séquence nominale de paquets. Ainsi, la séquence de paquets obtenue à l'étape S304 est préférentiellement colorée avec la classe de service CoS de plus forte priorité parmi les classes de service CoS non utilisées dans le plan de qualité de service QoS mis en œuvre dans le système de communication (préférentiellement, en utilisant un code de classe de service DSCP de niveau CS5 ou d'ordre supérieur), afin de réduire les latences de transport subies par la séquence de paquets obtenue à l'étape S304 et diminuer les risques de pertes de paquets au sein de la séquence de paquets obtenue à l'étape S304). Cette classe de service CoS bénéficie dans le plan de QoS d'une politique d'acheminement garanti au titre la signalisation réseau, afin d'éliminer les risques de pertes de paquets liées aux mécanismes de QoS au sein de ladite séquence de paquets obtenue à l'étape S304.

Comme pour la séquence nominale de paquets transmise à l'étape S302, la séquence de paquets obtenue à l'étape S304 peut être délimitée par au moins un paquet de début et par au moins un paquet de fin. Dans une variante de réalisation, la première application 141 transmet ladite séquence de paquets au cours de périodes temporelles prédéfinies et connues des seconde 142 et troisième 143 applications, dans lesquelles la première application 141 est supposée transmettre la séquence nominale de paquets.

Comme pour la séquence nominale de paquets transmise à l'étape S302, les paquets de la séquence de paquets obtenue à l'étape S304 sont transmis en s'appuyant sur un protocole de transport sans acquittement ni retransmission en cas de perte. Dans un mode de réalisation préféré, les paquets de la séquence de paquets obtenue à l'étape S304 sont transmis en s'appuyant sur le protocole UDP.

Dans une étape S305 suivante, la première application 141 transmet au moins une fois, à destination de la seconde application 142, cette autre séquence de paquets obtenue à l'étape S304. Préférentiellement, ladite séquence de paquets est transmise au moins deux fois, de manière à contrer des pertes de paquets qui pourraient survenir en chemin. Préférentiellement, ladite séquence de paquets est colorée avec la classe de service CoS que la séquence nominale de paquets. Ensuite, la première application 141 effectue l'étape S306.

Il convient donc de noter que les étapes S304 et S305 sont optionnelles et permettent avantageusement à la première application 141 d'indiquer à la troisième application 143 que l'information envoyée par la troisième application 143 à destination du domaine rouge a bien été reçue dans le domaine rouge.

La **Fig. 4** illustre schématiquement un algorithme, mis en œuvre par la troisième application 143, pour permettre à la première application 141 de recevoir des informations de la part de ladite troisième application 143 via la seconde application 142.

Dans une étape S401, la troisième application 143 reçoit une séquence de paquets de tailles respectives prédéfinies. Les paquets de ladite séquence sont ordonnés selon un ordonnancement prédéfini en fonction de leurs tailles respectives. La séquence de paquets reçue à l'étape S401 par la troisième application 143 correspond à une version chiffrée de la séquence nominale de paquets transmise par la première application 141 à l'étape S302.

Dans une étape S402 suivante, la troisième application 143 vérifie si la troisième application doit fournir une information à la première application 141 et/ou à la seconde application 142 (i.e. au domaine rouge). Ladite information peut provenir d'une station de gestion réseau NMS, en charge de mettre en œuvre des mécanismes FCAPS pour le domaine noir, selon le modèle ISO de gestion de réseau. D'une manière générale, ladite information peut provenir d'un équipement réseau du domaine noir.

Dans un mode de réalisation particulier, ladite information est représentative de conditions de transmission dans le domaine noir (*e.g*. indication de congestion). Dans un autre mode de réalisation particulier, ladite information est représentative d'une commande à appliquer par la première application 141 ou par la station de gestion réseau NMS, voire une commande de changement d'état dans une machine d'états mise en œuvre dans le domaine rouge (*e.g.* par la première application 141 ou par la station de gestion réseau NMS du domaine rouge). Dans un autre mode de réalisation particulier, ladite information est une information de changement d'état dans une machine d'états mise en œuvre dans le domaine noir (*e.g.* par la troisième application 143).

Si la troisième application 143 doit fournir une information à la première application 141 et/ou à la seconde application 142, une étape S404 est effectuée ; sinon, une étape S403 est effectuée.

Dans l'étape S403, la troisième application 143 propage sans modification, à destination de la seconde application 142, la séquence de paquets reçue à l'étape S401. Puis, il est mis fin à l'algorithme de la Fig. 4.

Dans l'étape S404, la troisième application 143 obtient l'information à fournir à la première application 141 et/ou à la seconde application 142.

Dans une étape S405 suivante, la troisième application 143 détermine un code correspondant à l'information à fournir. Chaque information potentiellement à transmettre à la première application 141 et/ou à la seconde application 142 correspond à un code dans une table de correspondance prédéterminée, dont les première 141, seconde 142 et troisième 143 applications ont connaissance.

Dans une étape S406 suivante, la troisième application 143 applique des modifications à la séquence de paquets reçue à l'étape S401, par suppression d'au moins un paquet de ladite séquence, de manière représentative du code déterminé. La troisième application 143 encode ainsi l'information à fournir au domaine rouge. En reprenant l'exemple abordé en relation avec la Fig. 3, la séquence de paquets reçue à l'étape S401 est une succession de cinq paquets de tailles respectives TC1, TC2, TC3, TC4, TC5. Supposons que le code auquel correspond l'information à fournir implique de supprimer le paquet de taille TC3 pour fournir ladite information à la première application 141 et/ou à la seconde application 142, alors la troisième application 143 supprime le paquet de taille TC3 de la séquence de paquets reçue à l'étape S401. Une telle modification de séquence de paquets est présentée ci-après en relation avec la Fig. 6B. Selon le code déterminé, plus d'un paquet peut être à supprimer de la séquence de paquets reçue à l'étape S401. Une telle modification de séquence de paquets est présentée ci-après en relation avec la Fig. 6C.

Selon un mode de réalisation particulier reposant sur des codes binaires, la troisième application 143 obtient, grâce à la table de correspondance précédemment évoquée, un code binaire *MI* qui correspond à l'information à transmettre au domaine rouge. Le nombre de bits utilisables pour définir le code binaire *MI,* quelle que soit l'information à transmettre, est égal au nombre de paquets de tailles distinctes dans la séquence nominale de paquets après chiffrement (qui est donc le même que le nombre de paquets de tailles distinctes dans la séquence nominale de paquets telle que transmise par la première application 141). Ensuite, chaque paquet de la séquence nominale de paquets après chiffrement telle que reçue par la troisième application 143 est stocké dans une mémoire tampon de type FIFO (*First-In First-Out* en anglais). Les paquets sont traités les uns après les autres par la troisième application 143 de la manière suivante (sans obligatoirement attendre que tous les paquets de la séquence nominale de paquets après chiffrement ne soient reçus par la troisième application 143) :
- la troisième application 143 dépile un paquet de la mémoire tampon de type FIFO et en récupère la taille *Tc ;*
- la troisième application 143 applique une fonction *Fc* à la taille *Tc* récupérée de sorte à obtenir un code binaire *Mc.* Le nombre de bits définissant le code binaire *Mc* est égal au nombre de paquets de tailles distinctes dans la séquence nominale de paquets après chiffrement (qui est donc le même que le nombre de paquets de tailles distinctes dans la séquence nominale de paquets telle que transmise par la première application 141). La fonction Fc est une fonction bijective telle que, pour une taille de paquet donnée en entrée parmi les tailles possibles de la séquence nominale de paquets après chiffrement, la fonction Fc retourne un code binaire avec un unique bit à la valeur « 1 » et les autres bits à la valeur « 0 ». Le code binaire *Mc* est donc représentatif de la taille du paquet dépilé ;
- la troisième application 143 effectue une opération de ET logique entre les codes binaires *MI* et *Mc.* Lorsque le résultat de l'opération de ET logique est égal au code binaire *Mc,* alors la troisième application 143 décide de ne pas supprimer ledit paquet et de le propager à destination de la seconde application 142 ; sinon, la troisième application 143 décide de supprimer ledit paquet et de ne pas le propager à destination de la seconde application 142. En d'autres termes, la troisième application 143 décide de supprimer ou pas ledit paquet en fonction du résultat d'une opération de ET logique entre les codes binaires *MI* et *Mc ;* et
- la troisième application 143 réitère ces opérations jusqu'à ce que tous les paquets de la séquence nominale de paquets après chiffrement telle que reçue par la troisième application 143 soient dépilés et traités.

Dans une étape S407 suivante, la troisième application 143 propage, à destination de la seconde application 142, la séquence de paquets ainsi modifiée.

Dans une étape S408 optionnelle suivante, la troisième application 143 maintient ces modifications pour chaque séquence nominale de paquets qui est reçue ultérieurement, jusqu'à remplir une condition prédéfinie. Dans un mode de réalisation particulier, la troisième application 143 maintient ces modifications pour chaque séquence nominale de paquets qui est reçue ultérieurement, jusqu'à ce qu'une quantité prédéfinie Q de telles séquences nominales de paquets ait été ainsi modifiée. Cette quantité prédéfinie Q est telle que, après avoir maintenu ces modifications pour Q séquences nominales de paquets successives, il est considéré que la seconde application 142 a été capable de discriminer les modifications apportées par la troisième application 143 d'éventuelles pertes de paquets liées à de mauvaises conditions de transmission entre le premier sous-réseau de communication 101 de type rouge et le second sous-réseau de communication 102 de type rouge. Selon un autre mode de réalisation particulier, la troisième application 143 maintient ces modifications pour chaque séquence nominale de paquets qui est reçue ultérieurement, jusqu'à ce que la première application 141 acquitte positivement la réception de l'information qui a été fournie par la troisième application 143 grâce à ces modifications. Il est ainsi possible de s'affranchir de pertes de paquets pouvant survenir en chemin.

La **Fig. 5** illustre schématiquement un algorithme, mis en œuvre par la seconde application 142, pour permettre à la première application 141 de recevoir des informations de la part de la troisième application 143, à l'aide de ladite seconde application 142.

Dans une étape S501, la seconde application 142 reçoit une séquence de paquets. La séquence de paquets reçue est supposée être la séquence nominale de paquets transmise par la première application 141 à l'étape S302 (puisque la seconde passerelle de sécurité 122 a procédé à un déchiffrement), à moins que la troisième application 143 n'ait procédé à des modifications par suppression d'au moins un paquet par rapport à la séquence de paquets résultant du chiffrement par la passerelle de sécurité 121 de la séquence nominale de paquets telle que transmise par la première application 141 à l'étape S302. Il est aussi possible, en fonction des conditions de transmission dans le domaine noir, qu'un ou plusieurs paquets aient été perdus en chemin. Tous les paquets de ladite séquence sont supposés être reçus lorsqu'un délimiteur de fin de séquence est reçu par la seconde application 142, ou lorsqu'une temporisation de durée prédéfinie est écoulée après réception du dernier paquet sans qu'un nouveau paquet pouvant correspondre à la même séquence de paquets ne soit reçu.

Dans une étape S502 suivante, la seconde application 142 vérifie si la séquence de paquets reçue à l'étape S501 est complète, c'est-à-dire si la séquence de paquets reçue à l'étape S501 correspond à la séquence nominale de paquets. Dans un mode de réalisation particulier, si la séquence de paquets reçue à l'étape S501 est incomplète, la seconde application 142 attend de recevoir au moins un autre exemplaire de ladite séquence de paquets avant de déterminer quelle information est transmise par la troisième application 143 au domaine noir, pour confirmer que chaque paquet manquant n'est pas dû à une perte en chemin. Si la séquence de paquets reçue à l'étape S501 est complète, une étape S503 est effectuée ; sinon, une étape S504 est effectuée.

Dans l'étape S503, la seconde application 142 jette la séquence (nominale) de paquets reçue à l'étape S501, lorsqu'il est prévu que les paquets de ladite séquence contiennent des données fictives (*dummy data* en anglais). La seconde application 142 traite le contenu des paquets de ladite séquence, lorsqu'il est prévu que les paquets de ladite séquence contiennent des données utiles.

Dans l'étape S504, la seconde application 142 obtient une information qui a été encodée par la troisième application 143 dans la séquence de paquets incomplète reçue à l'étape S501. Comme détaillé en relation avec la Fig. 4, la troisième application 143 a encodé ladite information par suppression d'au moins un paquet par rapport à la séquence de paquets reçue en provenance de la première application 141. La seconde application 142 détecte chaque paquet manquant dans la séquence de paquets incomplète et en déduit un code correspondant. Grâce à une table de correspondance prédéterminée, la seconde application 142 détermine à partir dudit code quelle information est fournie par la troisième application 143. En reprenant l'exemple abordé en relation avec les Figs. 3 et 4, la séquence de paquets reçue à l'étape S501 est une succession de quatre paquets de tailles respectives T1, T2, T4, T5 (la troisième application ayant supprimé le paquet de taille TC3). Le paquet de taille T3 ayant disparu de la séquence attendue de la part de la première application 141, la seconde application en déduit quelle information la troisième application 142 a voulu faire passer dans le domaine rouge.

Dans ledit mode de réalisation particulier reposant sur des codes binaires, chaque paquet de la séquence de paquets telle que reçue par la seconde application 142 est stocké dans une mémoire tampon de type FIFO. Les paquets sont traités les uns après les autres par la seconde application 142 de la manière suivante :
- la seconde application 142 dépile un paquet de la mémoire tampon de type FIFO et en récupère la taille *T* ;
- la seconde application 142 applique une fonction *F* à la taille *T* récupérée de sorte à obtenir un code binaire *M.* Le nombre de bits définissant le code binaire *M* est égal au nombre de paquets de tailles distinctes dans la séquence nominale de paquets telle que transmise par la première application 141. La fonction *F* est une fonction bijective telle que, pour une taille de paquet donnée en entrée parmi les tailles possibles de la séquence nominale de paquets, la fonction *F* retourne un code binaire avec un unique bit à la valeur « 1 » et les autres bits à la valeur « 0 ». La fonction *F* est en outre telle que, pour un paquet de taille *T* résultant après chiffrement par la passerelle de sécurité 121 en un paquet de taille *Tc, F(T)*=*Fc(Tc).* Le code binaire *M* est donc représentatif de la taille du paquet dépilé ;
- la seconde application 142 effectue une opération de OU logique entre le code binaire *M* et une variable *MI'* qui est un code binaire de même taille que le code binaire *M.* La variable *MI'* est initialisée à la valeur « 0 » avant de dépiler le tout premier paquet de la séquence de paquets telle que reçue par la seconde application 142. La variable *MI'* est mise à jour avec le résultat de ladite opération de OU logique ; et
- la seconde application 142 réitère ces opérations jusqu'à ce que tous les paquets de la séquence de paquets telle que reçue par la seconde application 142 soient dépilés et traités.

Ainsi, après avoir dépilé et traité tous les paquets de la séquence de paquets telle que reçue par la seconde application 142, la variable *MI'* donne un code binaire représentatif de l'information que la troisième application 143 a voulu faire passer au domaine rouge. L'information que la troisième application 143 a voulu faire passer au domaine rouge peut alors être retrouvée grâce au code binaire de la variable *MI'* et de la table de correspondance précédemment évoquée.

Dans une étape S505 suivante, la seconde application 142 transmet, à la première application 141, l'information obtenue à l'étape S504. Dans un mode de réalisation préférentiel, la seconde application 142 transmet ladite information en utilisant un message dans un paquet coloré avec une classe de service CoS différente de celle utilisée par la première application 141 pour transmettre la séquence nominale de paquets à l'étape S302. Cela permet d'implémenter en parallèle un mécanisme similaire à celui décrit en relation avec les Figs. 3 à 5, mais dans le sens de communication depuis la seconde application 142 vers la première application 141, sans interférence entre ces mécanismes parallèles. Ce message est préférentiellement envoyé en s'appuyant sur un protocole de transport avec acquittement et retransmission, afin de s'assurer de la bonne réception dudit message par la première application 141. Préférentiellement, ledit message est transmis en s'appuyant sur le protocole TCP *(Transmission Control Protocol* en anglais), tel que défini dans la norme RFC 793.

Les Figs. 3 à 5 détaillent un mécanisme dans lequel une information est transmise par la troisième application 143, localisée dans le domaine noir, vers la première application 141, localisée dans le domaine rouge et génératrice de la séquence nominale de paquets que la troisième application 143 est susceptible de modifier, par suppression d'au moins un paquet, pour fournir ladite information. Ce mécanisme repose notamment sur un retour de la seconde application 142 vers la première application 141, ce qui permet à la première application 141 de recevoir ladite information fournie par la troisième application 143. Cela suppose que la première application 141 est destinataire de ladite information fournie par la troisième application 143. Dans le cas où la seconde application 142 est destinataire de ladite information fournie par la troisième application 143, le retour de la seconde application 142 vers la première application 141 peut être omis, ou utilisé pour requérir que la première application 141 transmette une séquence de paquets représentative d'un acquittement positif de réception par la seconde application 142 de ladite information fournie par la troisième application 143. La seconde application 142 ne transmet pas, dans ce cas, à la première application 141, ladite information fournie par la troisième application 143, mais une requête d'acquittement positif. De plus, dans ce cas, ladite information est traitée par la seconde application 142. La seconde application 142 peut alors propager ladite information à la station de gestion réseau NMS, en charge de mettre en œuvre des mécanismes FCAPS pour le domaine rouge, selon le modèle ISO de gestion de réseau. Comme mentionnée précédemment, ladite information peut être représentative de conditions de transmission dans le domaine noir (*e.g*. indication de congestion), ou d'une commande à appliquer par la seconde application 142 ou par la station de gestion réseau NMS. Ladite information peut aussi être une commande de changement d'état dans une machine d'états mise en œuvre dans le domaine rouge (*e.g.* par la seconde application 142 ou par la station de gestion réseau NMS du domaine rouge). Ladite information peut aussi être une information de changement d'état dans une machine d'états mise en œuvre dans le domaine noir (*e.g.* par la troisième application 143).

Les **Figs. 6A, 6B et 6C** illustrent schématiquement des séquences de paquets apparaissant dans des échanges intervenant dans le cadre de l'exécution des algorithmes des Figs. 3 à 5. Les paquets sont représentés schématiquement par des rectangles, dont les hauteurs respectives sont représentatives des tailles desdits paquets (ou dont les différences de hauteurs sont représentatives des différences relatives de tailles desdits paquets).

La Fig. 6A représente schématiquement un exemple de succession de paquets telle qu'émise par la première application 141 à l'étape S302. La succession de paquets commence par un paquet de début 60. Commence alors ladite séquence nominale de paquets, telle qu'obtenue par la première application 141 à l'étape S301. Ladite séquence nominale de paquets présentée comporte un ensemble de cinq paquets 61, 62, 63, 64, 65 ordonnancés par taille croissante. Vient ensuite un paquet de fin 66. Les paquets de début 60 et de fin 66 ont des tailles respectives prédéfinies distinctes, et ces tailles ne sont pas utilisées pour générer ladite séquence nominale de paquets. Lorsque la troisième application 143 n'a pas d'information à faire passer au domaine rouge, la seconde application 142 est supposée recevoir la succession de paquets telle qu'émise par la première application 141 à l'étape S302. Lorsque la troisième application 143 a une information à faire passer au domaine rouge, la troisième application 143 retire au moins un paquet de la séquence reçue de la première application 141, et la seconde application 142 reçoit une séquence modifiée de paquets par rapport à la séquence nominale de paquets telle qu'émise par la première application 141 à l'étape S302. La Fig. 6B représente schématiquement un exemple de succession de paquets reçue par la seconde application 142 à l'étape S501, lorsque la première application 141 a transmis à l'étape S302 la séquence nominale de paquets représentée à la Fig. 6A et que la troisième application a retiré le paquet 63 (dans sa version chiffrée) pour faire passer une information au domaine rouge. La Fig. 6C représente schématiquement un exemple de succession de paquets reçue par la seconde application 142 à l'étape S501, lorsque la première application 141 a transmis à l'étape S302 la séquence nominale de paquets représentée à la Fig. 6A et que la troisième application a retiré les paquets 61 et 63 (dans leurs versions chiffrées respectives) pour faire passer une information au domaine rouge.

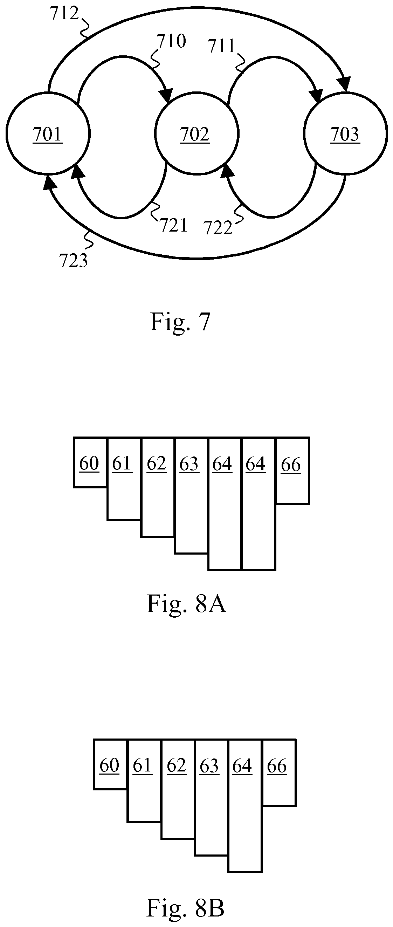

Par exécution des algorithmes des Figs. 3 à 5, la troisième application 143 peut faire passer une information au domaine rouge. La variété d'informations que la troisième application 143 peut faire passer au domaine rouge dépend de la taille de la séquence nominale de paquets utilisée, c'est-à-dire la quantité de modifications possibles que la troisième application 143 est autorisée à appliquer sur la version chiffrée de la séquence nominale de paquets. Si par exemple la séquence nominale de paquets comporte cinq paquets de tailles respectives distinctes et que la troisième application 143 est autorisée à ne supprimer qu'un paquet de la version chiffrée de la séquence nominale de paquets, alors la troisième application 143 peut faire passer cinq informations distinctes au domaine rouge. Si par exemple la séquence nominale de paquets comporte cinq paquets de tailles respectives distinctes et que la troisième application 143 est autorisée à supprimer plusieurs paquets de la version chiffrée de la séquence nominale de paquets sans toutefois supprimer tous les paquets, alors la troisième application 143 peut faire passer trente informations distinctes au domaine rouge. Les informations que la troisième application 143 peut faire passer au domaine rouge sont par exemple des commandes prédéfinies, voire des commandes de changement d'état dans une machine d'état implémentée au sein du domaine rouge. Ces informations que la troisième application 143 peut faire passer au domaine rouge sont par exemple des informations de changement d'état dans une machine d'état implémentée au sein du domaine noir. Un exemple de telles machines d'état est présenté ci-après en relation avec la Fig. 7.

La machine d'états représentée à la **Fig. 7** comporte trois états 701, 702, 703, et est, de manière illustrative, décrite comme étant implémentée dans le domaine noir et la troisième application 143 informe la première application 141 de la progression au sein de la machine d'états. Un événement de transition 710 permet de passer de l'état 701 à l'état 702, un événement de transition 711 permet de passer de l'état 702 à l'état 703, un événement de transition 712 permet de passer de l'état 701 à l'état 703, un événement de transition 721 permet de revenir de l'état 702 à l'état 701, un événement de transition 722 permet de revenir de l'état 703 à l'état 702 et un événement de transition 723 permet de revenir de l'état 703 à l'état 701. Une séquence nominale de paquets comportant trois paquets de tailles respectives distinctes permet donc à la troisième application 143 de passer des informations représentatives des événements de changement d'état dans la machine d'état représentée à la Fig. 7. Dans ce cadre de machine d'état, il est possible de réduire la quantité d'événements nécessaires pour gérer la machine d'états. L'événement de transition 721, permettant de revenir de l'état 702 à l'état 701, et l'événement de transition 722, permettant de revenir de l'état 703 à l'état 702, peuvent être identiques et signifier « passer à un état précédent dans une liste ordonnée prédéfinie des états de la machine d'état ». Pour ce faire, une taille particulière prédéfinie de paquets est utilisée. Cette taille particulière n'est pas utilisée dans le reste de la séquence nominale. La première application 141 transmet deux paquets de cette taille particulière dans la séquence nominale de paquets, par exemple à la fin de ladite séquence nominale. Lorsque la troisième application 143 retire un paquet correspondant à la version chiffrée d'un de ces paquets de taille particulière, la troisième application 143 requiert de passer à un état de rang *N-1* (en considérant que l'état actuel est de rang N) dans une liste ordonnée prédéfinie des états de la machine d'état (c'est-à-dire à l'état 701 si l'état actuel est l'état 701 et à l'état 702 si l'état actuel est l'état 703). Il est possible de faire un saut de passer à un état de rang *N-x, x > 1,* dans la liste ordonnée prédéfinie des états de la machine d'état, en utilisant plus de paquets de cette taille particulière dans la séquence nominale de paquets. Par exemple, la première application 141 transmet trois paquets de cette taille particulière dans la séquence nominale de paquets, par exemple à la fin de ladite séquence nominale. Lorsque la troisième application 143 retire un paquet correspondant à la version chiffrée d'un de ces paquets de taille particulière, la troisième application 143 requiert de passer à un état de rang *N-1* dans la liste ordonnée prédéfinie des états de la machine d'état (*i.e.* à l'état 701 si l'état actuel est l'état 701 et à l'état 702 si l'état actuel est l'état 703), et lorsque la troisième application 143 retire un paquet correspondant à la version chiffrée d'un de ces paquets de taille particulière, la troisième application 143 requiert de passer à un état de rang *N-2* dans la liste ordonnée prédéfinie des états de la machine d'état (*i.e.* à l'état 701 si l'état actuel est l'état 703). Cette approche est particulièrement intéressante dans le cas où la machine d'états comporte une grande quantité d'états.

Les **Figs. 8A et 8B** illustrent schématiquement des séquences de paquets apparaissant dans des échanges intervenant dans le cadre de la gestion de la machine d'états présentée à la Fig. 7. Comme pour les Figs. 6A à 6C, les paquets sont représentés schématiquement par des rectangles, dont les hauteurs respectives sont représentatives des tailles desdits paquets (ou dont les différences de hauteurs sont représentatives des différences relatives de tailles desdits paquets).

La Fig. 8A représente schématiquement un exemple de succession de paquets telle qu'émise par la première application 141 à l'étape S302. La succession de paquets commence par le paquet de début 60. Commence alors ladite séquence nominale de paquets, telle qu'obtenue par la première application 141 à l'étape S301. Ladite séquence nominale de paquets présentée comporte un ensemble de cinq paquets. Les paquets 61, 62, 63 déjà présents à la Fig. 6A, et deux paquets 64 de taille particulière identique. Les paquets sont ordonnancés dans ladite séquence nominale par taille croissante. Vient ensuite le paquet de fin 66. Lorsque la troisième application 143 n'a pas d'information à faire passer au domaine rouge, la seconde application 142 est supposée recevoir la succession de paquets telle qu'émise par la première application 141 à l'étape S302. Lorsque la troisième application 143 a une information à faire passer au domaine rouge, la troisième application 143 retire au moins un paquet de la séquence reçue de la première application 141, et la seconde application 142 reçoit une séquence modifiée de paquets par rapport à la séquence nominale de paquets telle qu'émise par la première application 141 à l'étape S302. La Fig. 8B représente schématiquement un exemple de succession de paquets reçue par la seconde application 142 à l'étape S501, lorsque la première application 141 a transmis à l'étape S302 la séquence nominale de paquets représentée à la Fig. 8A et que la troisième application 143 a retiré un des paquets 64 (dans sa version chiffrée) pour demander au domaine rouge de passer à un état de rang *N-1* dans la liste ordonnée prédéfinie des états de la machine d'état.

Les tables de correspondance utilisées par les première 141, seconde 142 et troisième 143 applications peuvent être prédéfinies à l'installation du système de communication. Il est cependant possible que les première 141, seconde 142 et troisième 143 applications ne connaissent *a priori* pas toutes les spécificités des passerelles de sécurité 121, 122, de sorte que les première 141, seconde 142 et troisième 143 applications ne savent *a priori* pas quelles modifications de taille apporte la passerelle de sécurité 121 lors du chiffrement, en fonction des tailles des paquets transmis par la première application 141. En effet, il est possible que, pour certaines tailles de paquets transmis par la première application 141, la passerelle de sécurité 121 insère des données de bourrage (*padding data* en anglais) lors de l'opération de chiffrement, de sorte que deux paquets de tailles distinctes transmis par la première application 141 se retrouvent avec une même taille après chiffrement. Pour déterminer les tailles de paquets utilisables pour construire la séquence nominale de paquets, les première 141, seconde 142 et troisième 143 applications mettent préférentiellement en place une phase d'initialisation, décrite ci-après en relation avec les Figs. 9 à 11.

La **Fig. 9** illustre schématiquement un algorithme, mis en œuvre par la première application 141, dans le cadre de la phase d'initialisation.

Dans une étape S901, la première application 141 effectue, avec la seconde application 142, un échange de déclenchement de la phase d'initialisation. Pour ce faire, la première application 141 transmet à la seconde application un message indiquant que la première application 141 souhaite déclencher la procédure d'initialisation. Ce message est préférentiellement envoyé en s'appuyant sur un protocole de transport avec acquittement et retransmission, afin de s'assurer de la bonne réception dudit message par la seconde application 142. Préférentiellement, ledit message est transmis en s'appuyant sur le protocole TCP. La première application 141 reçoit alors un message de réponse de la part de la seconde application 142. Si le message de réponse inclut une information indiquant que la seconde application 142 est prête à déclencher la procédure d'initialisation, une étape S902 est effectuée ; sinon, l'étape S901 est réitérée ultérieurement.

Au moment où la phase d'initialisation est déclenchée, les première 141, seconde 142 et troisième 143 applications considèrent qu'il existe deux tailles de paquets utilisables pour construire la séquence nominale de paquets qui permet de faire passer des informations du domaine noir au domaine rouge : une taille minimale et une taille maximale. Du point de vue des première 141 et seconde 142 applications, la taille minimale correspond à la taille que chaque paquet transmis par la première application 141 à destination de la seconde application 142 doit avoir au minimum, et la taille maximale correspond à la taille que chaque paquet transmis par la première application 141 à destination de la seconde application 142 peut avoir au maximum. Du point de vue de la troisième application 143, la taille minimale correspond à la taille après chiffrement d'un paquet ayant une taille égale à la taille que chaque paquet transmis par la première application 141 à destination de la seconde application 142 doit avoir au minimum, et la taille maximale correspond à la taille après chiffrement d'un paquet ayant une taille égale à la taille que chaque paquet transmis par la première application 141 à destination de la seconde application 142 peut avoir au maximum. La taille que chaque paquet transmis par la première application 141 à destination de la seconde application 142 doit avoir au minimum et la taille maximale correspond à la taille que chaque paquet transmis par la première application 141 à destination de la seconde application 142 peut avoir au maximum sont telles que, après chiffrement, les paquets correspondants ont des tailles distinctes.

Dans l'étape S902, la première application 141 obtient une séquence d'initialisation. La séquence d'initialisation est constituée d'un enchaînement remarquable de paquets de tailles respectives prédéfinies. Chaque paquet de la séquence d'initialisation est soit de taille égale à la taille maximale MTU *(Maximum Transmission Unit* en anglais) des paquets transmis sans fragmentation dans le domaine rouge, soit de taille égale à la taille minimale des paquets transmis dans le domaine rouge. Pour les réseaux de communication cités en partie introductive, une taille maximale MTU de 1300 octets est généralement admise au niveau des équipements réseau du domaine rouge, pour rester cohérente avec la taille d'entêtes ajoutés par les passerelles de sécurité et ne pas dépasser dans le domaine noir la taille maximale fixée par des modems satellites (taille maximale MTU égale à 1500 octets à ce niveau). L'agencement de la séquence d'initialisation est connu des première 141, seconde 142 et troisième 143 applications.

La séquence d'initialisation comporte préférentiellement en outre un autre ensemble de paquets destinés à permettre à la troisième application 143 d'effectuer un acquittement, par suppression d'au moins un des paquets dudit autre ensemble. Par exemple, ledit autre ensemble comporte au moins deux paquets, au moins un paquet de taille égale à ladite taille minimale et au moins un paquet de taille égale à ladite taille maximale. La troisième application 143 est alors supposée supprimer au moins un paquet de taille égale à ladite taille minimale lorsque la troisième application 143 ne souhaite pas lancer la phase d'initialisation (acquittement négatif), et est supposée supprimer au moins un paquet de taille égale à ladite taille maximale sinon (acquittement positif). Cet aspect est détaillé ci-après en relation avec la Fig. 10.

Dans une étape S903 suivante, la première application 141 transmet, à destination de la seconde application 142, la séquence d'initialisation obtenue à l'étape S901.

Comme pour la séquence nominale de paquets transmise à l'étape S302, la séquence d'initialisation (après chiffrement) est destinée à être interceptée par la troisième application 143. Un équipement réseau du domaine noir sur le chemin de transit depuis le premier sous-réseau de communication 101 de type rouge jusqu'au second sous-réseau de communication 102 de type rouge, comme par exemple l'équipement réseau 113, est adapté pour discriminer les paquets de la séquence d'initialisation (après chiffrement) parmi les paquets transportés dans le domaine noir et pour router lesdits paquets jusqu'à la troisième application 143.

Comme pour la séquence nominale de paquets transmise à l'étape S302, les paquets de la séquence d'initialisation sont transmis en s'appuyant sur un protocole de transport sans acquittement ni retransmission en cas de perte. Dans un mode de réalisation préféré, les paquets de la séquence d'initialisation sont transmis en s'appuyant sur le protocole UDP.

Les paquets de la séquence d'initialisation sont alors reçus par la passerelle de sécurité 121 qui procède alors à un chiffrement desdits paquets. Après chiffrement, les paquets de la séquence d'initialisation sont transmis dans le domaine noir, afin d'être traités par la troisième application 143 comme décrit ci-après en relation avec la Fig. 10. Dans un mode de réalisation particulier, la séquence d'initialisation est colorée avec une classe de service CoS dédiée, *e.g.* en utilisant un code de classe de service DSCP dédié. Préférentiellement, la séquence d'initialisation est colorée avec la même classe de service CoS que la séquence nominale de paquets. Ainsi, la séquence d'initialisation est préférentiellement colorée avec la classe de service CoS de plus forte priorité parmi les classes de service CoS non utilisées dans le plan de qualité de service QoS mis en œuvre dans le système de communication (préférentiellement, en utilisant un code de classe de service DSCP de niveau CS5 ou d'ordre supérieur), afin de réduire les latences de transport subies par la séquence d'initialisation et diminuer les risques de pertes de paquets au sein de la séquence d'initialisation. Cette classe de service CoS bénéficie dans le plan de QoS d'une politique d'acheminement garanti au titre la signalisation réseau, afin d'éliminer les risques de pertes de paquets liées aux mécanismes de QoS au sein de ladite séquence d'initialisation.

Dans une étape S904 suivante, la première application 141 se met en attente d'un acquittement positif en provenance de la seconde application 142. Comme détaillé ci-après en relation avec les Figs. 10 et 11, un tel acquittement positif est représentatif du fait que la seconde application 142 a détecté la séquence d'initialisation transmise par la première application 141 à l'étape S903 et que la troisième application 143 a indiqué avoir reconnu la version chiffrée de la séquence d'initialisation transmise par la première application 141 à l'étape S903. Si dans un laps de temps prédéterminé, aucun acquittement positif n'est reçu en provenance de la seconde application 142, ou si un acquittement négatif est reçu en provenance de la seconde application 142, une étape S905 est effectuée. Sinon, une étape S907 est effectuée.

Dans l'étape S905, la première application 141 vérifie si une quantité maximum prédéfinie d'essais a été atteinte pour mettre en œuvre la phase d'initialisation. Si tel est le cas, une étape S906 est effectuée, au cours de laquelle il est mis fin à l'algorithme de la Fig. 9 ; sinon, l'étape S903 est réitérée.

L'implémentation d'un mécanisme d'acquittement vis-à-vis de la séquence d'initialisation est optionnelle, et permet avantageusement de s'assurer que les seconde 142 et troisième 143 applications ont bien détecté la séquence d'initialisation transmise par la première application 141 à l'étape S903.

Dans l'étape S907, la première application 141 obtient une séquence de test. La séquence de test consiste en un enchaînement prédéfini de l'ensemble des tailles de paquets utilisables (sans prendre en compte d'éventuelles restrictions liées à la passerelle de sécurité 121) pour générer la séquence nominale de paquets qui permet de faire passer des informations du domaine noir au domaine rouge. Chaque paquet de la séquence de test a une taille différente. Dans la séquence de test, les paquets sont ordonnés par taille croissante ou par taille décroissante.

Dans une étape S908 suivante, la première application 141 transmet, à destination de la seconde application 142, la séquence de test obtenue à l'étape S907.

Comme pour la séquence d'initialisation transmise à l'étape S903, la séquence de test (après chiffrement) est destinée à être interceptée par la troisième application 143. Un équipement réseau du domaine noir sur le chemin de transit depuis le premier sous-réseau de communication 101 de type rouge jusqu'au second sous-réseau de communication 102 de type rouge, comme par exemple l'équipement réseau 113, est adapté pour discriminer les paquets de la séquence de test (après chiffrement) parmi les paquets transportés dans le domaine noir et pour router lesdits paquets jusqu'à la troisième application 143.

Les paquets de la séquence de test sont alors reçus par la passerelle de sécurité 121 qui procède alors à un chiffrement desdits paquets. Après chiffrement, les paquets de la séquence de test sont transmis dans le domaine noir, afin d'être traités par la troisième application 143 comme décrit ci-après en relation avec la Fig. 10.

Dans un mode de réalisation particulier, la séquence de test est colorée avec une classe de service CoS dédiée, *e.g.* en utilisant un code de classe de service DSCP dédié. Préférentiellement, la séquence de test est colorée avec la même classe de service CoS que la séquence nominale de paquets. Ainsi, la séquence de test est préférentiellement colorée avec la classe de service CoS de plus forte priorité parmi les classes de service CoS non utilisées dans le plan de qualité de service QoS mis en œuvre dans le système de communication (préférentiellement, en utilisant un code de classe de service DSCP de niveau CS5 ou d'ordre supérieur), afin de réduire les latences de transport subies par la séquence de test et diminuer les risques de pertes de paquets au sein de la séquence de test). Cette classe de service CoS bénéficie dans le plan de QoS d'une politique d'acheminement garanti au titre la signalisation réseau, afin d'éliminer les risques de pertes de paquets liées aux mécanismes de QoS au sein de ladite séquence de test.

Comme pour la séquence nominale de paquets transmise à l'étape S302, les paquets de la séquence de test sont transmis en s'appuyant sur un protocole de transport sans acquittement ni retransmission en cas de perte. Dans un mode de réalisation préféré, les paquets de la séquence de test sont transmis en s'appuyant sur le protocole UDP.

Dans une étape S909 suivante, la première application 141 se met en attente d'une liste de paquets en provenance de la seconde application 142. Cette liste contient un descriptif de chacun des paquets de la séquence de test que la seconde application 142 a effectivement reçu. En effet, comme détaillé ci-après en relation avec la Fig. 10, la troisième application 143 est susceptible de supprimer un ou plusieurs paquets de la séquence de test, pour signifier que plusieurs paquets après chiffrement sont de même taille, alors que les paquets de la séquence de test avant chiffrement ont des tailles respectives distinctes.

Dans une étape S910 suivante, la première application 141 sélectionne une table de correspondance applicable d'après la liste de paquets reçue à l'étape S909, et ce parmi un ensemble prédéfini de tables de correspondance possibles. Plus la liste reçue à l'étape S909 contient de paquets de tailles distinctes, plus la variété d'informations que la troisième application 143 peut faire passer au domaine rouge est grande. Sélectionner la table de correspondance définit la séquence nominale de paquets à utiliser, puisque cela définit le nombre de paquets de tailles distinctes que la première application 141 peut utiliser pour permettre à la troisième application 143 de faire passer une information au domaine rouge.

Dans ledit mode de réalisation particulier à base de codes binaires, chaque table de correspondance est associée de manière prédéfinie à une fonction *F* et à une fonction *Fc.* Sélectionner la table de correspondance revient à imposer la fonction *F* et aussi la fonction *Fc,* de sorte que les traitements effectués par les première 141, seconde 142 et troisième 143 applications soient cohérents entre eux.

Dans une étape S911 suivante, la première application 141 transmet, à destination de la seconde application 142, une séquence de paquets représentative de la table de correspondance sélectionnée à l'étape S910. Ladite séquence comporte donc un premier ensemble de paquets qui est représentatif de la table de correspondance sélectionnée à l'étape S910. Chaque paquet dudit premier ensemble est de taille égale soit à ladite taille maximale, soit à ladite taille minimale, et ledit premier ensemble est une succession de tels paquets de telle sorte que les tailles respectives des paquets successifs dudit premier ensemble représentent la table de correspondance sélectionnée à l'étape S910.

La séquence de paquets représentative de la table de correspondance sélectionnée à l'étape S910 est destinée à être interceptée par la troisième application 143. Un équipement réseau du domaine noir sur le chemin de transit depuis le premier sous-réseau de communication 101 de type rouge jusqu'au second sous-réseau de communication 102 de type rouge, comme par exemple l'équipement réseau 113, est adapté pour discriminer les paquets de ladite séquence (après chiffrement) parmi les paquets transportés dans le domaine noir et pour router lesdits paquets jusqu'à la troisième application 143.

La séquence de paquets représentative de la table de correspondance sélectionnée à l'étape S910 comporte préférentiellement en outre un second ensemble de paquets destiné à permettre à la troisième application 143 d'effectuer un acquittement, par suppression d'au moins un des paquets dudit second ensemble. Par exemple, ledit second ensemble comporte au moins deux paquets, au moins un paquet de taille égale à ladite taille minimale et au moins un paquet de taille égale à ladite taille maximale. La troisième application 143 est alors supposée supprimer au moins un paquet de taille égale à ladite taille minimale lorsque la troisième application 143 est en désaccord avec la table de correspondance sélectionnée par la première application 141 (acquittement négatif), et est supposée supprimer au moins un paquet de taille égale à ladite taille maximale sinon (acquittement positif), ou vice versa. Cet aspect est détaillé ci-après en relation avec la Fig. 10.

Dans un mode de réalisation particulier, la séquence de paquets représentative de la table de correspondance sélectionnée à l'étape S910 est colorée avec une classe de service CoS dédiée, *e.g.* en utilisant un code de classe de service DSCP dédié. Préférentiellement, la séquence de paquets représentative de la table de correspondance sélectionnée à l'étape S910 est colorée avec la même classe de service CoS que la séquence nominale de paquets. Ainsi, la séquence de paquets représentative de la table de correspondance sélectionnée à l'étape S910 est préférentiellement colorée avec la classe de service CoS de plus forte priorité parmi les classes de service CoS non utilisées dans le plan de qualité de service QoS mis en œuvre dans le système de communication (préférentiellement, en utilisant un code de classe de service DSCP de niveau CS5 ou d'ordre supérieur), afin de réduire les latences de transport subies par la séquence de paquets représentative de la table de correspondance sélectionnée à l'étape S910 et diminuer les risques de pertes de paquets au sein de la séquence de paquets représentative de la table de correspondance sélectionnée à l'étape S910. Cette classe de service CoS bénéficie dans le plan de QoS d'une politique d'acheminement garanti au titre la signalisation réseau, afin d'éliminer les risques de pertes de paquets liées aux mécanismes de QoS au sein de ladite séquence de paquets représentative de la table de correspondance sélectionnée à l'étape S910.

Comme pour la séquence nominale de paquets transmise à l'étape S302, les paquets de la séquence de paquets représentative de la table de correspondance sélectionnée à l'étape S910 sont transmis en s'appuyant sur un protocole de transport sans acquittement ni retransmission en cas de perte. Dans un mode de réalisation préféré, les paquets de la séquence de paquets représentative de la table de correspondance sélectionnée à l'étape S910 sont transmis en s'appuyant sur le protocole UDP.

Dans une étape S912 suivante, la première application 141 se met en attente d'un acquittement positif en provenance de la seconde application 142. Comme détaillé ci-après en relation avec les Figs. 10 et 11, cet acquittement positif est représentatif du fait que la seconde application 142 a détecté que la troisième application 143 a indiqué avoir reçu la version chiffrée de la séquence de paquets représentative de la table de correspondance sélectionnée à l'étape S910, et donc à appliquer dans le cadre de l'exécution des Figs. 3 à 5. Si un acquittement positif est reçu, une étape S913 est effectuée, au cours de laquelle la première application 141 décide d'appliquer, dans le cadre de l'exécution des Figs. 3 à 5, la table de correspondance sélectionnée à l'étape S910 ; sinon, une étape S914 est effectuée, au cours de laquelle il est mis fin à l'algorithme de la Fig. 9.

La **Fig. 10** illustre schématiquement un algorithme, mis en œuvre par la troisième application 143, dans le cadre de la phase d'initialisation.

Dans une étape S1001, la troisième application 143 reçoit une version chiffrée de la séquence d'initialisation transmise par la première application 141 à l'étape S903.

Dans une étape S1002 optionnelle suivante, la troisième application 143 modifie la séquence d'initialisation par suppression d'au moins un paquet, pour indiquer que la troisième application 143 a reconnu la version chiffrée de la séquence d'initialisation transmise par la première application 141 à l'étape S903. Dans un mode de réalisation particulier déjà évoqué, la séquence d'initialisation comporte en outre un autre ensemble de paquets destinés à permettre à la troisième application 143 d'effectuer un acquittement, par suppression d'au moins un des paquets dudit autre ensemble. Par exemple, ledit autre ensemble comporte au moins deux paquets, au moins un paquet de taille égale à ladite taille minimale et au moins un paquet de taille égale à ladite taille maximale. La troisième application 143 est alors supposée supprimer au moins un paquet de taille égale à ladite taille minimale lorsque la troisième application 143 ne souhaite pas lancer la phase d'initialisation (acquittement négatif), et est supposée supprimer au moins un paquet de taille égale à ladite taille maximale sinon (acquittement positif).

Dans une étape S1003 suivante, la troisième application 143 propage, à destination de la seconde application 142, la séquence d'initialisation (sous forme chiffrée), éventuellement modifiée à l'étape S1002.

Dans une étape S1004 suivante, la troisième application 143 reçoit une autre séquence de paquets. Cette autre séquence de paquets est une version chiffrée de la séquence de test transmise par la première application 141 à l'étape S908.

Dans une étape S1005 suivante, la troisième application 143 modifie éventuellement la séquence de paquets reçue à l'étape S1004. La troisième application 143 parcourt les paquets de ladite séquence de paquets dans leur ordre d'arrivée, et en analyse les tailles respectives. Lorsque la troisième application 143 rencontre une taille de paquet déjà rencontrée dans le parcours de ladite séquence de paquets, la troisième application 143 supprime le paquet correspondant de ladite séquence de paquets. En d'autres termes, la troisième application 143 supprime les doublons de taille dans la séquence de paquets reçue à l'étape S1004. Comme déjà mentionné, ces doublons de taille peuvent survenir suite à une insertion de données de bourrage par la passerelle de sécurité 121 pendant les opérations de chiffrement des paquets de la séquence de test émise par la première application 141 à l'étape S908. Etant donné que la séquence de test émise par la première application 141 repose sur des paquets ordonnancés par taille croissante ou décroissante, les doublons de taille sont des paquets successifs dans la séquence de paquets reçue à l'étape S1004.

Dans une étape S1006 suivante, la troisième application 143 propage, à destination de la seconde application 142, la séquence de test (sous forme chiffrée) éventuellement modifiée à l'étape S1005.

Dans une étape S1007 suivante, la troisième application 143 se met en attente de recevoir une séquence de paquets représentative de la table de correspondance sélectionnée par la première application 141. Ladite séquence de paquets est celle transmise par la première application 141 à l'étape S911.

Dans une étape S1008 suivante, la troisième application 143 stocke une information représentative de la table de correspondance sélectionnée par la première application 141, de manière à appliquer, dans le cadre de l'exécution des Figs. 3 à 5, la table de correspondance sélectionnée par la première application 141. Si la troisième application 143 est en désaccord avec la table de correspondance sélectionnée par la première application 141, la troisième application 143 n'effectue pas l'étape S1008.

Dans le mode de réalisation particulier à base de codes binaires déjà évoqué, chaque table de correspondance est associée de manière prédéfinie à une fonction Fc à appliquer pour retrouver un code binaire à partir d'une taille de paquet chiffré. La troisième application 143 sélectionne donc la fonction *Fc* à appliquer dans le cadre de l'exécution des Figs. 3 à 5.

Dans une étape S1009 optionnelle suivante, la troisième application 143 modifie la séquence de paquets reçue à l'étape S1007, par suppression d'au moins un paquet, pour indiquer si la troisième application 143 est d'accord avec la table de correspondance sélectionnée par la première application 141. Comme indiqué en relation avec la Fig. 9, ladite séquence de paquets comporte préférentiellement un ensemble de paquets destinés à permettre à la troisième application 143 d'effectuer un acquittement, par suppression d'au moins un des paquets dudit ensemble. Par exemple, ledit ensemble comporte au moins deux paquets de tailles distinctes, à savoir au moins un paquet de taille égale à ladite taille minimale et au moins un paquet de taille égale à ladite taille maximale. La troisième application 143 supprime au moins un paquet de taille égale à ladite taille minimale lorsque la troisième application 143 est en désaccord avec la table de correspondance sélectionnée par la première application 141 (acquittement négatif), et supprime au moins un paquet de taille égale à ladite taille maximale sinon (acquittement positif)..

Dans une étape S1010 suivante, la troisième application 143 propage, à destination de la seconde application 142, la séquence modifiée à l'étape S1009.

La **Fig. 11** illustre schématiquement un algorithme, mis en œuvre par la seconde application 142, dans le cadre de la phase d'initialisation.

Dans une étape S1101, la seconde application 142 effectue, avec la première application 141, un échange de déclenchement de la phase d'initialisation. Pour ce faire, la seconde application 142 reçoit de la première application 141 un message indiquant que la première application 141 souhaite déclencher la procédure d'initialisation. Sur réception de ce message, la seconde application 142 répond à la première application 141 avec un message de réponse. Si la seconde application 142 est prête à déclencher la procédure d'initialisation, le message de réponse inclut une information indiquant que la seconde application 142 est prête à déclencher la procédure d'initialisation, et une étape S1102 est effectuée ; sinon, l'étape S1101 est réitérée ultérieurement. Ce message de réponse est préférentiellement envoyé en s'appuyant sur un protocole de transport avec acquittement et retransmission, afin de s'assurer de la bonne réception dudit message par la première application 141. Préférentiellement, ledit message est transmis en s'appuyant sur le protocole TCP.

Dans l'étape S1102, la seconde application 142 reçoit une séquence de paquets. Cette séquence de paquets est supposée correspondre à la séquence d'initialisation transmise par la première application 141 à l'étape S903, éventuellement modifiée par la troisième application 143 à l'étape S1002. Considérons par la suite que la troisième application 143 est supposée modifier la séquence d'initialisation (dans sa version chiffrée) pour fournir un acquittement.

Dans une étape S1103 suivante, la seconde application 142 vérifie si la séquence de paquets reçue à l'étape S1102 est complète, c'est-à-dire si la séquence de paquets reçue à l'étape S1101 correspond à la séquence d'initialisation telle que transmise par la première application 141 à l'étape S903. Si tel est le cas, cela signifie que la troisième application 143 n'a pas reconnu la version chiffrée de la séquence d'initialisation transmise par la première application 141 à l'étape S903, et la seconde application 142 envoie alors, dans une étape S1103, un acquittement négatif à la première application 141. Si la séquence de paquets reçue à l'étape S1101 est incomplète et que la modification correspond à une indication que la troisième application 143 a reconnu la version chiffrée de la séquence d'initialisation transmise par la première application 141 à l'étape S903 (modification optionnellement appliquée par la troisième application 143 à l'étape S1002), alors la seconde application 142 envoie, à l'étape S1103, un acquittement positif à la première application 141; sinon, la seconde application 142 envoie, à l'étape S1103, un acquittement négatif à la première application 141. Ensuite, une étape S1104 est effectuée. Dans le cas où la troisième application n'est pas supposée modifier la séquence d'initialisation (dans sa version chiffrée) pour fournir un acquittement, l'algorithme de la Fig. 11 passe directement de l'étape S1102 à l'étape S1104.

Dans l'étape S1104 suivante, la seconde application 142 reçoit une séquence de test, éventuellement modifiée suite aux opérations effectuées par la troisième application 143 à l'étape S1005. La séquence de test reçue par la seconde application 142 peut donc être différente de celle transmise par la première application 141 à l'étape S908. La séquence de test reçue par la seconde application 142 à l'étape S1104 contient des paquets qui sont de tailles distinctes, puisque les éventuels doublons ont été supprimés par la troisième application 143 à l'étape S1005.

Dans une étape S1105 suivante, la seconde application 142 détermine une liste de tailles de paquets présents dans la séquence de test reçue à l'étape S1104. Ce sont ces tailles de paquets qui peuvent être distinctement utilisées par la première application 141 pour générer la séquence nominale de paquets qui permet à la troisième application 143 de faire passer des informations au domaine rouge.

Dans une étape S1106 suivante, la seconde application 142 transmet, à la première application 141, la liste de tailles de paquets déterminée à l'étape S1105.

Dans une étape S1107 suivante, la seconde application 142 reçoit une séquence de paquets représentative de la table de correspondance sélectionnée par la première application 141. Ladite séquence de paquets est celle qui a été éventuellement modifiée par la troisième application 143 à l'étape S1009. La modification éventuellement apportée par la troisième application 143 à l'étape S1009 indique si la troisième application 143 est d'accord avec la table de correspondance sélectionnée par la première application 141. Si la troisième application 143 n'est pas d'accord avec la table de correspondance sélectionnée par la première application 141, la seconde application 142 propage un acquittement négatif à destination de la première application 141 et met fin à l'algorithme de la Fig. 11. Sinon, dans une étape S1108 suivante, la seconde application 142 stocke une information représentative de la table de correspondance sélectionnée par la première application 141, de manière à appliquer, dans le cadre de l'exécution des Figs. 3 à 5, la table de correspondance sélectionnée par la première application 141. Dans le mode de réalisation particulier à base de codes binaires déjà évoqué, chaque table de correspondance est associée de manière prédéfinie à une fonction *F* à appliquer pour retrouver un code binaire à partir d'une taille de paquet non chiffré. La seconde application 142 sélectionne donc la fonction *F* à appliquer dans le cadre de l'exécution des Figs. 3 à 5. La première application 141 peut faire de même. Puis, dans une étape S1109 suivante, la seconde application 142 propage un acquittement positif à destination de la première application 141 et met fin à l'algorithme de la Fig. 11.

Ainsi par exécution des algorithmes des Figs. 9 à 11, une table de correspondance adapté(e) au fonctionnement de la passerelle de sécurité 121 est sélectionnée par la première application 141 parmi un ensemble prédéfini de tables de correspondance.

## Revendications

1. Procédé de transmission d'une information à destination d'une première application (141) et/ou d'une seconde application (142) depuis une troisième application (143), la première application étant exécutée dans un premier sous-réseau (101) de type rouge et la seconde application dans un second sous-réseau de type rouge (102), la troisième application étant exécutée dans un réseau (103) de type noir, chaque sous-réseau de type rouge étant de niveau de sécurité supérieur au réseau de type noir, les premier et second sous-réseaux de type rouge étant interconnectés via le réseau de type noir par un tunnel sécurisé entre une première passerelle de sécurité (121) du premier sous-réseau de type rouge et une seconde passerelle de sécurité (122) du second sous-réseau de type rouge appliquant des opérations de chiffrement et de déchiffrement telles que chaque premier paquet de plus petite taille qu'un second paquet résulte après chiffrement en un premier paquet chiffré de taille inférieure ou égale à la taille du paquet résultant du chiffrement du second paquet, **caractérisé en ce que** :
- la première application transmet (S302) à destination de la seconde application une séquence nominale de paquets, les paquets de ladite séquence nominale étant ordonnés selon un ordonnancement prédéfini en fonction de leurs tailles respectives, et ladite séquence nominale étant telle qu'il est possible de déterminer sans ambiguïté en réception la taille de chaque paquet qui aurait été retiré de ladite séquence ;
- un équipement réseau (113) du réseau de type noir sur un chemin obligatoire dudit tunnel sécurisé route vers la troisième application chaque paquet de ladite séquence nominale après chiffrement de la première passerelle ;
- lorsque la troisième application souhaite transmettre ladite information à destination de la première application et/ou de la seconde application, la troisième application effectue des modifications (S406) de ladite séquence nominale après chiffrement de la première passerelle, par suppression d'au moins un paquet, chaque paquet supprimé étant fonction de ladite information, et propage (S407) les paquets de ladite séquence après chiffrement de la première passerelle qui n'ont pas été supprimés ;
- lorsque la troisième application ne souhaite pas transmettre d'information à destination de la première application et/ou de la seconde application, la troisième application propage (S403) les paquets de ladite séquence nominale après chiffrement de la première passerelle ;
- sur réception (S501) d'une séquence de paquets supposée être la séquence nominale de paquets, la seconde application vérifie (S502) si au moins un paquet a été supprimé par la troisième application ; et
- lorsque la seconde application détecte qu'au moins un paquet a été supprimé par la troisième application, la seconde application retrouve (S504) ladite information à partir de la taille de chaque paquet ainsi supprimé de ladite séquence nominale de paquets.

2. Procédé selon la revendication 1, **caractérisé en ce que** la séquence nominale de paquets est délimitée par au moins un paquet de début (60) et au moins un paquet de fin (66) de tailles respectives prédéfinies qui ne sont pas utilisées au sein de ladite séquence nominale de paquets.

3. Procédé selon l'une quelconque des revendications 1 et 2, **caractérisé en ce que** les paquets de la séquence nominale de paquets sont colorés avec une classe de service prédéfinie, et **en ce que** ledit équipement réseau du réseau de type noir route chaque paquet ainsi coloré, en provenant du premier sous-réseau de type rouge, vers la troisième application.

4. Procédé selon l'une quelconque des revendications 1 à 3, **caractérisé en ce que**, lorsque la troisième application a transmis ladite information à destination de la première application et/ou de la seconde application, la première application transmet (S305) à destination de la seconde application une autre séquence de paquets représentative d'un acquittement positif de réception de ladite information, les paquets de ladite autre séquence étant ordonnés selon un ordonnancement prédéfini en fonction de leurs tailles respectives, et **en ce que** ledit équipement réseau du réseau de type noir route vers la troisième application chaque paquet de ladite autre séquence après chiffrement de la première passerelle.

5. Procédé selon l'une quelconque des revendications 1 à 4, **caractérisé en ce que** la troisième application maintient (S408) les modifications pour chaque séquence nominale de paquets qui est reçue ultérieurement, jusqu'à remplir une condition prédéfinie.

6. Procédé selon la revendication 5, **caractérisé en ce que**, lorsque la seconde application reçoit une séquence nominale de paquets modifiée, la seconde application attend de recevoir au moins un autre exemplaire de ladite séquence de paquets modifiée avant de déterminer quelle information est transmise par la troisième application à destination de la première application et/ou de la seconde application.

7. Procédé selon l'une quelconque des revendications 1 à 6, **caractérisé en ce que** chaque information potentiellement à transmettre de la troisième application à la première application et/ou à la seconde application correspond à un code dans une table de correspondance prédéterminée, ladite information correspondant à un code binaire *MI* dans ladite table de correspondance,
**en ce que** la troisième application répète les étapes suivantes pour chaque paquet jusqu'à ce que tous les paquets de la séquence nominale de paquets après chiffrement soient traités :
- récupérer la taille *Tc* dudit paquet ;
- appliquer une fonction *Fc* à la taille *Tc* récupérée de sorte à obtenir un code binaire *Mc,* la fonction *Fc* étant une fonction bijective telle que, pour une taille de paquet donnée en entrée parmi les tailles possibles de la séquence nominale de paquets après chiffrement, la fonction *Fc* retourne un code binaire avec un unique bit à la valeur « 1 » et les autres bits à la valeur « 0 » ;
- supprimer ou pas ledit paquet en fonction du résultat d'une opération de ET logique entre les codes binaires *MI* et *Mc ;* et
**en ce que** la seconde application répète les étapes suivantes pour chaque paquet jusqu'à ce que tous les paquets de la séquence supposée être la séquence nominale de paquets soient traités :
- récupérer la taille *T* dudit paquet ;
- appliquer une fonction *F* à la taille *T* récupérée de sorte à obtenir un code binaire *M*, la fonction *F* est une fonction bijective telle que, pour une taille de paquet donnée en entrée parmi les tailles possibles de la séquence nominale de paquets, la fonction *F* retourne un code binaire avec un unique bit à la valeur « 1 » et les autres bits à la valeur « 0 », et en outre telle que, pour un paquet de taille *T* résultant après chiffrement par la première passerelle de sécurité en un paquet de taille *Tc, F(T)*=*Fc(Tc)* ; et
- mettre à jour une variable *MI',* initialisée à la valeur « 0 » pour le tout premier paquet de la séquence supposée être la séquence nominale de paquets, avec le résultat d'une opération de OU logique entre le code binaire *M* et la variable *MI' ;*
et **en ce que** la variable *MI'* donne un code binaire représentatif de ladite information au sein de la table de correspondance précédemment évoquée.

8. Procédé selon l'une quelconque des revendications 1 à 7, **caractérisé en ce que** ladite information est représentative d'une commande de changement d'état dans une machine d'états.

9. Procédé selon la revendication 8, **caractérisé en ce qu'**une taille particulière de paquet est représentative d'une action de passage à un état précédent dans une liste ordonnée prédéfinie des états de la machine d'état, et la première application transmet au moins deux paquets (64) de cette taille particulière dans la séquence nominale de paquets, cette taille particulière n'étant pas utilisée dans le reste de la séquence nominale, et **en ce que** la troisième application supprime une quantité *x* de paquets de ladite taille particulière au sein de ladite séquence nominale après chiffrement de la première passerelle pour représenter un passage à un état de rang *N-x.*

10. Procédé selon l'une quelconque des revendications 1 à 9, **caractérisé en ce qu'**une phase d'initialisation est préalablement implémentée comme suit :
- la première application transmet (S908) à destination de la seconde application une séquence de test consistant en un enchaînement prédéfini de l'ensemble des tailles de paquets utilisables pour générer ladite séquence nominale de paquets, chaque paquet de la séquence de test ayant une taille différente et lesdits paquets sont ordonnés par taille croissante ou décroissante ;
- ledit équipement réseau du réseau de type noir route vers la troisième application chaque paquet de ladite séquence de test après chiffrement de la première passerelle ;
- la troisième application supprime (S1005) chaque doublon de taille dans la séquence de test après chiffrement de la première passerelle et propage (S 1006) la séquence de test ainsi modifiée vers la seconde application ; et
- lorsque la seconde application reçoit (S1104) une séquence de paquets supposée être la séquence de test, la seconde application détermine (S1105) les tailles de paquets qui n'ont pas été supprimés par la troisième application, ces tailles de paquets pouvant alors être distinctement utilisées pour générer ladite séquence nominale de paquets, et en informe (S1106) la première application.

11. Procédé selon la revendication 10, **caractérisé en ce que** les paquets de la séquence de test sont colorés avec une classe de service prédéfinie, et **en ce que** ledit équipement réseau du réseau de type noir route chaque paquet ainsi coloré, en provenant du premier sous-réseau de type rouge, vers la troisième application.

12. Procédé selon l'une quelconque des revendications 10 et 11, **caractérisé en ce que** la phase d'initialisation est préalablement comme suit :
- la première application transmet (S903) à destination de la seconde application une séquence d'initialisation constituée d'un enchaînement remarquable de paquets, la taille de chaque paquet de la séquence d'initialisation est soit égale à une taille maximale sans fragmentation dans les premier et second sous-réseaux de type rouge, soit égale à une taille minimale de paquet dans les premier et second sous-réseaux de type rouge ; et
- ledit équipement réseau du réseau de type noir route vers la troisième application chaque paquet de ladite séquence d'initialisation après chiffrement de la première passerelle.

13. Procédé selon la revendication 12, **caractérisé en ce que** les paquets de la séquence d'initialisation sont colorés avec une classe de service prédéfinie, et **en ce que** ledit équipement réseau du réseau de type noir route chaque paquet ainsi coloré, en provenant du premier sous-réseau de type rouge, vers la troisième application.

14. Procédé selon l'une quelconque des revendications 12 et 13, **caractérisé en ce que** chaque information potentiellement à transmettre de la troisième application à la première application et/ou à la seconde application correspond à un code dans une table de correspondance prédéterminée, et :
- la première application transmet (S911) à destination de la seconde application une séquence de paquets représentative d'une table de correspondance sélectionnée parmi un ensemble prédéfini de tables de correspondance en fonction des tailles de paquets qui n'ont pas été supprimés par la troisième application au sein de la séquence de test, et ladite séquence de paquets représentative de la table de correspondance sélectionnée comporte un premier ensemble de paquets représentatif de la table de correspondance sélectionnée et un second ensemble destiné à permettre à la troisième application d'en effectuer un acquittement par suppression d'au moins un paquet dudit second ensemble, la taille de chaque paquet de la séquence de paquets représentative de la table de correspondance sélectionnée est soit égale à la taille maximale sans fragmentation dans les premier et second sous-réseaux de type rouge, soit égale à la taille minimale de paquet dans les premier et second sous-réseaux de type rouge ; et
- ledit équipement réseau du réseau de type noir route vers la troisième application chaque paquet de ladite séquence de paquets représentative de la table de correspondance sélectionnée après chiffrement de la première passerelle.

15. Système de transmission d'une information à destination d'une première application (141) et/ou d'une seconde application (142) depuis une troisième application (143), la première application étant exécutée dans un premier sous-réseau (101) de type rouge et la seconde application dans un second sous-réseau (102) de type rouge, la troisième application étant exécutée dans un réseau (103) de type noir, chaque sous-réseau de type rouge étant de niveau de sécurité supérieur au réseau de type noir, les premier et second sous-réseaux de type rouge étant interconnectés via le réseau de type noir par un tunnel sécurisé entre une première passerelle de sécurité (121) du premier sous-réseau de type rouge et une seconde passerelle de sécurité (122) du second sous-réseau de type rouge appliquant des opérations de chiffrement et de déchiffrement telles que chaque premier paquet de plus petite taille qu'un second paquet résulte après chiffrement en un premier paquet chiffré de taille inférieure ou égale à la taille du paquet résultant du chiffrement du second paquet, **caractérisé en ce que** :
- la première application est adaptée pour transmettre (S302) à destination de la seconde application une séquence nominale de paquets, les paquets de ladite séquence nominale étant ordonnés selon un ordonnancement prédéfini en fonction de leurs tailles respectives, et ladite séquence nominale étant telle qu'il est possible de déterminer sans ambiguïté en réception la taille de chaque paquet qui aurait été retiré de ladite séquence ;
- un équipement réseau (113) du réseau de type noir sur un chemin obligatoire dudit tunnel sécurisé est adapté pour router vers la troisième application chaque paquet de ladite séquence nominale après chiffrement de la première passerelle ;
- lorsque la troisième application souhaite transmettre ladite information à destination de la première application et/ou de la seconde application, la troisième application est adaptée pour effectuer (S406) des modifications de ladite séquence nominale après chiffrement de la première passerelle, par suppression d'au moins un paquet, chaque paquet supprimé étant fonction de ladite information, et pour propager (S407) les paquets de ladite séquence après chiffrement de la première passerelle qui n'ont pas été supprimés ;
- lorsque la troisième application ne souhaite pas transmettre d'information à destination de la première application et/ou de la seconde application, la troisième application est adaptée pour propager (S403) les paquets de ladite séquence nominale après chiffrement de la première passerelle ;
- sur réception (S501) d'une séquence de paquets supposée être la séquence nominale de paquets, la seconde application est adaptée pour vérifier (S502) si au moins un paquet a été supprimé par la troisième application ; et
- lorsque la seconde application détecte qu'au moins un paquet a été supprimé par la troisième application, la seconde application est adaptée pour retrouver (S504) ladite information à partir de la taille de chaque paquet ainsi supprimé de ladite séquence nominale de paquets.

## Patentansprüche

1. Verfahren zur Übertragung einer Information an eine erste Anwendung (141) und/oder eine zweite Anwendung (142) von einer dritten Anwendung (143), wobei die erste Anwendung in einem ersten Unternetzwerk (101) vom roten Typ und die zweite Anwendung in einem zweiten Unternetzwerk vom roten Typ (102) ausgeführt wird, wobei die dritte Anwendung in einem Netzwerk (103) vom schwarzen Typ ausgeführt wird, wobei jedes Unternetzwerk vom roten Typ ein höheres Sicherheitsniveau als das Netzwerk vom schwarzen Typ aufweist, wobei das erste und zweite Unternetzwerk vom roten Typ über das Netzwerk vom schwarzen Typ durch einen gesicherten Tunnel zwischen einem ersten Sicherheitsgateway (121) des ersten Unternetzwerks vom roten Typ und einem zweiten Sicherheitsgateway (122) des zweiten Unternetzwerks vom roten Typ miteinander verbunden sind, der Verschlüsselungs- und Entschlüsselungsoperationen so anwendet, dass jedes erste Paket mit einer kleineren Größe als ein zweites Paket nach Verschlüsselung ein erstes verschlüsseltes Paket mit einer Größe kleiner oder gleich der Größe des Pakets ergibt, das aus der Verschlüsselung des zweiten Pakets hervorgeht, **dadurch gekennzeichnet, dass**:
- die erste Anwendung an die zweite Anwendung eine Nennsequenz von Paketen überträgt (S302), wobei die Pakete der Nennsequenz nach einer Reihung geordnet sind, die in Abhängigkeit von ihren jeweiligen Größen vorgegeben ist, und wobei die Nennsequenz so ist, dass es möglich ist, ohne Empfangsmehrdeutigkeit die Größe jedes Pakets zu bestimmen, das aus der Sequenz entfernt worden wäre;
- ein Netzwerkgerät (113) des Netzwerks vom schwarzen Typ auf einem Pflichtweg des gesicherten Tunnels jedes Paket der Nennsequenz nach Verschlüsselung des ersten Gateways zu der dritten Anwendung leitet;
- wenn die dritte Anwendung die Information an die erste Anwendung und/oder die zweite Anwendung übertragen möchte, die dritte Anwendung durch Löschen mindestens eines Pakets Änderungen (S406) der Nennsequenz nach Verschlüsselung des ersten Gateways durchführt, wobei jedes gelöschte Paket von der Information abhängt, und die Pakete der Sequenz nach Verschlüsselung des ersten Gateways, die nicht gelöscht wurden, verbreitet (S407);
- wenn die dritte Anwendung keine Information an die erste Anwendung und/oder die zweite Anwendung übertragen möchte, die dritte Anwendung die Pakete der Nennsequenz nach Verschlüsselung des ersten Gateways verbreitet (S403);
- bei Empfang (S501) einer Sequenz von Paketen, die die Nennsequenz von Paketen sein sollte, die zweite Anwendung überprüft (S502), ob mindestens ein Paket durch die dritte Anwendung gelöscht wurde; und
- wenn die zweite Anwendung erkennt, dass mindestens ein Paket durch die dritte Anwendung gelöscht wurde, die zweite Anwendung die Information anhand der Größe jedes Pakets wiederfindet (S504), das so aus der Nennsequenz von Paketen gelöscht wurde.

2. Verfahren nach Anspruch 1, **dadurch gekennzeichnet, dass** die Nennsequenz von Paketen durch mindestens ein Anfangspaket (60) und mindestens ein Endpaket (66) mit jeweiligen vorgegebenen Größen begrenzt ist, die nicht innerhalb der Nennsequenz von Paketen genutzt werden.

3. Verfahren nach einem der Ansprüche 1 und 2, **dadurch gekennzeichnet, dass** die Pakete der Nennsequenz von Paketen mit einer vorgegebenen Dienstklasse gefärbt sind, und dadurch, dass das Netzwerkgerät des Netzwerks vom schwarzen Typ jedes so gefärbte Paket von dem ersten Unternetzwerk vom roten Typ zu der dritten Anwendung leitet.

4. Verfahren nach einem der Ansprüche 1 bis 3, **dadurch gekennzeichnet, dass**, wenn die dritte Anwendung die Information an die erste Anwendung und/oder die zweite Anwendung übertragen hat, die erste Anwendung eine andere Sequenz von Paketen, die für eine positive Empfangsquittierung der Information repräsentativ ist, an die zweite Anwendung überträgt (S305), wobei die Pakete der anderen Sequenz nach einer Reihung geordnet sind, die in Abhängigkeit von ihren jeweiligen Größen vorgegeben ist, und dadurch, dass das Netzwerkgerät des Netzwerks vom schwarzen Typ jedes Paket der anderen Sequenz nach Verschlüsselung des ersten Gateways zu der dritten Anwendung leitet.

5. Verfahren nach einem der Ansprüche 1 bis 4, **dadurch gekennzeichnet, dass** die dritte Anwendung die Änderungen für jede Nennsequenz von Paketen, die später empfangen wird, beibehält (S408), bis eine vorgegebene Bedingung erfüllt ist.

6. Verfahren nach Anspruch 5, **dadurch gekennzeichnet, dass**, wenn die zweite Anwendung eine geänderte Nennsequenz von Paketen empfängt, die zweite Anwendung darauf wartet, mindestens ein anderes Exemplar der geänderten Sequenz von Paketen zu empfangen, bevor sie bestimmt, welche Information durch die dritte Anwendung an die erste Anwendung und/oder die zweite Anwendung übertragen wird.

7. Verfahren nach einem der Ansprüche 1 bis 6, **dadurch gekennzeichnet, dass** jede Information, die potentiell von der dritten Anwendung an die erste Anwendung und/oder die zweite Anwendung zu übertragen ist, einem Code in einer vorbestimmten Entsprechungstabelle entspricht, wobei die Information einem Binärcode *MI* in der Entsprechungstabelle entspricht,
dadurch, dass die dritte Anwendung die folgenden Schritte für jedes Paket wiederholt, bis alle Pakete der Nennsequenz von Paketen nach Verschlüsselung verarbeitet sind:
- Abrufen der Größe *Tc* des Pakets;
- Anwenden einer Funktion *Fc* auf die abgerufene Größe *Tc,* um einen Binärcode *Mc* zu erhalten, wobei die Funktion *Fc* eine bijektive Funktion ist, so dass für eine bestimmte Paketgröße am Eingang unter den möglichen Größen der Nennsequenz von Paketen nach Verschlüsselung die Funktion *Fc* einen Binärcode mit einem einzigen Bit mit dem Wert "1" und den anderen Bits mit dem Wert "0" zurückgibt;
- Löschen des Pakets oder nicht, in Abhängigkeit von dem Ergebnis einer logischen UND-Operation zwischen den Binärcodes *MI* und *Mc*; und
dadurch, dass die zweite Anwendung die folgenden Schritte für jedes Paket wiederholt, bis alle Pakete der Nennsequenz, die die Nennsequenz von Paketen sein sollte, verarbeitet sind:
- Abrufen der Größe *T* des Pakets;
- Anwenden einer Funktion F auf die abgerufene Größe *T,* um einen Binärcode *M* zu erhalten, die Funktion *F* ist eine bijektive Funktion, so dass für eine bestimmte Paketgröße am Eingang unter den möglichen Größen der Nennsequenz von Paketen die Funktion *F* einen Binärcode mit einem einzigen Bit mit dem Wert " 1" und den anderen Bits mit dem Wert "0" zurückgibt, und ferner, so dass für ein Paket der Größe *T,* das nach Verschlüsselung durch den ersten Sicherheitsgateway ein erstes Paket der Größe *Tc ergibt, F(T)*=*Fc(Tc)*; und
- Aktualisieren einer Variablen *MI',* die mit dem Wert "0" initialisiert ist, für das allererste Paket der Sequenz, die die Nennsequenz von Paketen sein sollte, mit dem Ergebnis einer logischen ODER-Operation zwischen dem Binärcode *M* und der Variablen *MI';*
und dadurch, dass die Variable *MI'* einen Binärcode liefert, der für die Information innerhalb der zuvor erwähnten Entsprechungstabelle repräsentativ ist.

8. Verfahren nach einem der Ansprüche 1 bis 7, **dadurch gekennzeichnet, dass** die Information für einen Zustandsänderungsbefehl in einer Zustandsmaschine repräsentativ ist.

9. Verfahren nach Anspruch 8, **dadurch gekennzeichnet, dass** eine bestimmte Paketgröße für eine Aktion des Wechselns zu einem vorigen Zustand in einer vorgegebenen geordneten Liste der Zustände der Zustandsmaschine repräsentativ ist, und die erste Anwendung mindestens zwei Pakete (64) dieser bestimmten Größe in der Nennsequenz von Paketen überträgt, wobei diese bestimmte Größe im Rest der Nennsequenz nicht genutzt wird, und dadurch, dass die dritte Anwendung eine Menge x von Paketen der bestimmten Größe innerhalb der Nennsequenz von Paketen nach Verschlüsselung des ersten Gateways löscht, um einen Wechsel zu einem Zustand des Rangs *N-x* darzustellen.

10. Verfahren nach einem der Ansprüche 1 bis 9, **dadurch gekennzeichnet, dass** zuvor eine Initialisierungsphase wie folgt implementiert wird:
- die erste Anwendung überträgt (S908) an die zweite Anwendung eine Testsequenz, die aus einer vorgegebenen Verkettung der Gesamtheit der nutzbaren Paketgrößen besteht, um die Nennsequenz von Paketen zu erzeugen, wobei jedes Paket der Testsequenz eine verschiedene Größe aufweist und die Pakete aufsteigend oder absteigend nach Größe sortiert sind;
- das Netzwerkgerät des Netzwerks vom schwarzen Typ leitet jedes Paket der Testsequenz nach Verschlüsselung des ersten Gateways zu der dritten Anwendung;
- die dritte Anwendung löscht (S1005) jede Größendublette in der Testsequenz nach Verschlüsselung des ersten Gateways und verbreitet (S1006) die so geänderte Testsequenz zu der zweiten Anwendung; und
- wenn die zweite Anwendung eine Sequenz von Paketen empfängt (S1104), die die Testsequenz sein sollte, bestimmt (S 1105) die zweite Anwendung die Größen von Paketen, die nicht durch die dritte Anwendung gelöscht wurden, wobei diese Paketgrößen dann gesondert genutzt werden können, um die Nennsequenz von Paketen zu erzeugen, und informiert (S1106) die erste Anwendung darüber.

11. Verfahren nach Anspruch 10, **dadurch gekennzeichnet, dass** die Pakete der Testsequenz mit einer vorgegebenen Dienstklasse gefärbt sind, und dadurch, dass das Netzwerkgerät des Netzwerks vom schwarzen Typ jedes so gefärbte Paket von dem ersten Unternetzwerk vom roten Typ zu der dritten Anwendung leitet.

12. Verfahren nach einem der Ansprüche 10 und 11, **dadurch gekennzeichnet, dass** die Initialisierungsphase zuvor wie folgt ist:
- die erste Anwendung überträgt (S903) an die zweite Anwendung eine Initialisierungssequenz, die von einer beachtenswerten Verkettung von Paketen gebildet ist, die Größe jedes Pakets der Initialisierungssequenz ist entweder gleich einer maximalen Größe ohne Fragmentierung im ersten und zweiten Unternetzwerk vom roten Typ oder gleich einer minimalen Paketgröße im ersten und zweiten Unternetzwerk vom roten Typ; und
- das Netzwerkgerät des Netzwerks vom schwarzen Typ leitet jedes Paket der Initialisierungssequenz nach Verschlüsselung des ersten Gateways zu der dritten Anwendung.

13. Verfahren nach Anspruch 12, **dadurch gekennzeichnet, dass** die Pakete der Initialisierungssequenz mit einer vorgegebenen Dienstklasse gefärbt sind, und dadurch, dass das Netzwerkgerät des Netzwerks vom schwarzen Typ jedes so gefärbte Paket von dem ersten Unternetzwerk vom roten Typ zu der dritten Anwendung leitet.

14. Verfahren nach einem der Ansprüche 12 und 13, **dadurch gekennzeichnet, dass** jede Information, die potentiell von der dritten Anwendung an die erste Anwendung und/oder die zweite Anwendung zu übertragen ist, einem Code in einer vorbestimmten Entsprechungstabelle entspricht, und:
- die erste Anwendung an die zweite Anwendung eine Sequenz von Paketen überträgt (S911), die für eine Entsprechungstabelle repräsentativ ist, die aus einem vorgegebenen Satz von Entsprechungstabellen in Abhängigkeit von den Größen von Paketen ausgewählt ist, die nicht durch die dritte Anwendung innerhalb der Testsequenz gelöscht wurden, und die Sequenz von Paketen, die für die ausgewählte Entsprechungstabelle repräsentativ ist, einen ersten Satz von Paketen aufweist, der für die ausgewählte Entsprechungstabelle repräsentativ ist, und einen zweiten Satz, der dazu bestimmt ist, der dritten Anwendung zu gestatten, dafür eine Quittierung durch Löschung mindestens eines Pakets des zweiten Satzes vorzunehmen, wobei die Größe jedes Pakets der Sequenz von Paketen, die für die ausgewählte Entsprechungstabelle repräsentativ ist, entweder gleich der maximalen Größe ohne Fragmentierung im ersten und zweiten Unternetzwerk vom roten Typ oder gleich der minimalen Paketgröße im ersten und zweiten Unternetzwerk vom roten Typ ist; und
- das Netzwerkgerät des Netzwerks vom schwarzen Typ jedes Paket der Sequenz von Paketen, die für die ausgewählte Entsprechungstabelle repräsentativ ist, nach Verschlüsselung des ersten Gateways zu der dritten Anwendung leitet.

15. System zur Übertragung einer Information an eine erste Anwendung (141) und/oder eine zweite Anwendung (142) von einer dritten Anwendung (143), wobei die erste Anwendung in einem ersten Unternetzwerk (101) vom roten Typ und die zweite Anwendung in einem zweiten Unternetzwerk (102) vom roten Typ ausgeführt wird, wobei die dritte Anwendung in einem Netzwerk (103) vom schwarzen Typ ausgeführt wird, wobei jedes Unternetzwerk vom roten Typ ein höheres Sicherheitsniveau als das Netzwerk vom schwarzen Typ aufweist, wobei das erste und zweite Unternetzwerk vom roten Typ über das Netzwerk vom schwarzen Typ durch einen gesicherten Tunnel zwischen einem ersten Sicherheitsgateway (121) des ersten Unternetzwerks vom roten Typ und einem zweiten Sicherheitsgateway (122) des zweiten Unternetzwerks vom roten Typ miteinander verbunden sind, der Verschlüsselungs- und Entschlüsselungsoperationen so anwendet, dass jedes erste Paket mit einer kleineren Größe als ein zweites Paket nach Verschlüsselung ein erstes verschlüsseltes Paket mit einer Größe kleiner oder gleich der Größe des Pakets ergibt, das aus der Verschlüsselung des zweiten Pakets hervorgeht, **dadurch gekennzeichnet, dass**:
- die erste Anwendung geeignet ist, an die zweite Anwendung eine Nennsequenz von Paketen zu übertragen (S302), wobei die Pakete der Nennsequenz nach einer Reihung geordnet sind, die in Abhängigkeit von ihren jeweiligen Größen vorgegeben ist, und wobei die Nennsequenz so ist, dass es möglich ist, ohne Empfangsmehrdeutigkeit die Größe jedes Pakets zu bestimmen, das aus der Sequenz entfernt worden wäre;
- ein Netzwerkgerät (113) des Netzwerks vom schwarzen Typ auf einem Pflichtweg des gesicherten Tunnels geeignet ist, jedes Paket der Nennsequenz nach Verschlüsselung des ersten Gateways zu der dritten Anwendung zu leiten;
- wenn die dritte Anwendung die Information an die erste Anwendung und/oder die zweite Anwendung übertragen möchte, die dritte Anwendung geeignet ist, durch Löschen mindestens eines Pakets Änderungen der Nennsequenz nach Verschlüsselung des ersten Gateways durchzuführen (S406), wobei jedes gelöschte Paket von der Information abhängt, und die Pakete der Sequenz nach Verschlüsselung des ersten Gateways, die nicht gelöscht wurden, zu verbreiten (S407);
- wenn die dritte Anwendung keine Information an die erste Anwendung und/oder die zweite Anwendung übertragen möchte, die dritte Anwendung geeignet ist, die Pakete der Nennsequenz nach Verschlüsselung des ersten Gateways zu verbreiten (S403);
- bei Empfang (S501) einer Sequenz von Paketen, die die Nennsequenz von Paketen sein sollte, die zweite Anwendung geeignet ist, zu überprüfen (S502), ob mindestens ein Paket durch die dritte Anwendung gelöscht wurde; und
- wenn die zweite Anwendung erkennt, dass mindestens ein Paket durch die dritte Anwendung gelöscht wurde, die zweite Anwendung geeignet ist, die Information anhand der Größe jedes Pakets wiederzufinden (S504), das so aus der Nennsequenz von Paketen gelöscht wurde.

## Claims

1. A method for transmitting information to a first application (141) and/or a second application (142) from a third application (143), the first application being executed in a first subnetwork (101) of red type and the second application in a second subnetwork (102) of red type, the third application being executed in a network (103) of black type, each subnetwork of red type having a security level higher than the network of black type, the first and second subnetworks of red type being interconnected via the network of black type by a secure tunnel between a first security gateway (121) of the first subnetwork of red type and a second security gateway (122) of the second subnetwork of red type which apply ciphering and deciphering operations such that each first packet with a smaller size than a second packet results after ciphering in a first ciphered packet with a size less than or equal to the size of the packet resulting from the ciphering of the second packet, **characterised in that**:
- the first application transmits (S302) to the second application a nominal sequence of packets, the packets in said normal sequence being ordered in a predefined order according to their respective sizes, and said nominal sequence being such that it is possible to determine unambiguously on reception the size of each packet that would have been removed from said sequence;
- network equipment (113) of the network of black type on a mandatory path of said secure tunnel routes to the third application each packet in said nominal sequence after ciphering by the first gateway;
- when the third application wishes to transmit said information to the first application and/or the second application, the third application makes modifications (S406) to said nominal sequence after ciphering by the first gateway, by deleting at least one packet, each deleted packet being dependent on said information, and propagates (S407) the packets of said sequence after ciphering by the first gateway that have not been deleted;
- when the third application does not wish to transmit information to the first application and/or the second application, the third application propagates (S403) the packets of said nominal sequence after ciphering by the first gateway;
- on reception (S501) of a sequence of packets supposed to be the nominal sequence of packets, the second application checks (S502) whether at least one packet has been deleted by the third application; and
- when the second application detects that at least one packet has been deleted by the third application, the second application retrieves (S504) said information from the size of each thus deleted packet of said nominal sequence of packets.

2. The method according to claim 1, **characterised in that** the nominal sequence of packets is delimited by at least one start packet (60) and at least one end packet (66) with predefined respective sizes that are not used in said nominal sequence of packets.

3. The method according to any one of claims 1 and 2, **characterised in that** the packets of the nominal sequence of packets are coloured with a predefined service class, and **in that** said network equipment of the network of black type routes each packet thus coloured, coming from the first subnetwork of red type, to the third application.

4. The method according to any one of claims 1 to 3, **characterised in that**, when the third application has transmitted said information to the first application and/or the second application, the first application transmits (S305) to the second application another sequence of packets representing a positive acknowledgement of receipt of said information, the packets of said other sequence being ordered in a predefined order according to their respective sizes, and **in that** said network equipment of the network of black type routes to the third application each packet of said other sequence after ciphering by the first gateway.

5. The method according to any one of claims 1 to 4, **characterised in that** the third application maintains (S408) the modifications for each nominal sequence of packets that is received subsequently, until a predefined condition is fulfilled.

6. The method according to claim 5, **characterised in that**, when the second application receives a modified nominal sequence of packets, the second application waits to receive at least one other copy of said modified sequence of packets before determining what information is transmitted by the third application to the first application and/or the second application.

7. The method according to any one of claims 1 to 6, **characterised in that** each information potentially to be transmitted from the third application to the first application and/or to the second application corresponds to a code in a predetermined look-up table, said information corresponding to a binary code *MI* in said look-up table,
**in that** the third application repeats the following steps for each packet until all the packets of the nominal sequence of packets after ciphering are processed:
- recovering the size *Tc* of said packet;
- applying a function *Fc* to the recovered size *Tc* so as to obtain a binary code *Mc,* the function *Fc* being a bijective function such that, for a given packet size input among the possible sizes of the nominal sequence of packets after ciphering, the function *Fc* returns a binary code with a single bit at the value "1" and the other bits at the value "0";
- deleting or not said packet according to the result of a logic AND operation between the binary codes *MI* and *Mc;* and
**in that** the second application repeats the following steps for each packet until all the packets of the sequence supposed to be the nominal sequence of packets are processed:
- recovering the size *T* of said packet;
- applying a function *F* to the recovered size *T* so as to obtain a binary code *M,* the function *F* is a bijective function such that, for a given size of packet input among the possible sizes of the nominal sequence of packets, the function *F* returns a binary code with a single bit at the value "1" and the other bits at the value "0", and furthermore such that, for a packet of size *T* resulting after ciphering by the first security gateway in a packet of size *Tc, F(T)* = *Fc(Tc);* and
- updating a variable *MI'*, initialised to the valued "0" for the very first packet of the sequence supposed to be the nominal sequence of packets, with the result of a logic OR operation between the binary code *M* and the variable *MI'*;
and **in that** the variable *MI'* gives a binary code representing said information in the previously mentioned look-up table.

8. The method according to any one of claims 1 to 7, **characterised in that** said information represents a command to change state in a state machine.

9. The method according to claim 8, **characterised in that** a particular packet size represents an action of passing to a previous state in a predefined ordered list of the states of the state machine, and the first application transmits at least two packets (64) of this particular size in the nominal sequence of packets, this particular size not being used in the rest of the nominal sequence, and **in that** the third application deletes a quantity x of packets of said particular size in said nominal sequence after ciphering by the first gateway in order to represent a change to a state of rank *N-x.*

10. The method according to any one of claims 1 to 9, **characterised in that** an initialisation phase is previously implemented as follows;
- the first application transmits (S908) to the second application a test sequence consisting of a predefined concatenation of all the sizes of packets that can be used for generating said nominal sequence of packets, each packet of said test sequence having a different size, and said packets are ordered by increasing or decreasing size;
- said network equipment of the network of black type routes to the third application each packet of said test sequence after ciphering by the first gateway;
- the third application deletes (S1005) each size doublet in the test sequence after ciphering by the first gateway and propagates (S1006) the test sequence thus modified to the second application; and
- when the second application receives (S 1104) a sequence of packets supposed to be the test sequence, the second application determines (S1105) the sizes of packets that have not been deleted by the third application, these sizes of packets then being able to be used distinctly to generate said nominal sequence of packets, and informs (S 1106) the first application thereof.

11. The method according to claim 10, **characterised in that** the packets of the test sequence are coloured with a predefined service class, and **in that** said network equipment of the network of black type routes each packet thus coloured, coming from the first subnetwork of red type, to the third application.

12. The method according to any one of claims 10 and 11, **characterised in that** the initialisation phase is first as follows:
- the first application transmits (S903) to the second application an initialisation sequence consisting of a remarkable concatenation of packets, the size of each packet in the initialisation sequence is either equal to a maximum size without fragmentation in the first and second subnetworks of red type, or equal to a minimum packet size in the first and second subnetworks of red type; and
- said network equipment of the network of black type routes to the third application each packet of said initialisation sequence after ciphering by the first gateway.

13. The method according to claim 12, **characterised in that** the packets of the initialisation sequence are coloured with a predefined service class, and said network equipment of the network of black type routes each packet thus coloured, coming from the first subnetwork of red type, to the third application.

14. The method according to any one of claims 12 and 13, **characterised in that** each information potentially to be transmitted from the third application to the first application and/or to the second application corresponds to a code in a predetermined look-up table, and:
- the first application transmits (S911) to the second application a sequence of packets representing a look-up table selected from a predefined set of look-up tables according to the sizes of packets that have not been deleted by the third application in the test sequence, and said sequence of packets representing the selected look-up table comprises a first set of packets representing the selected look-up table and a second set intended to enable the third application to acknowledge it by deleting at least one packet in said second set, the size of each packet of the sequence of packets representing the selected look-up table is either equal to the maximum size without fragmentation in the first and second subnetworks of red type, or equal to the minimum packet size in the first and second subnetworks of red type; and
- said network equipment of the network routes of black type to the third application each packet of said sequence of packets representing the selected look-up table after ciphering by the first gateway.

15. System for transmitting information to a first application (141) and/or a second application (142) from a third application (143), the first application being executed in a first subnetwork (101) of red type and the second application in a second subnetwork (102) of red type, the third application being executed in a network (103) of black type, each subnetwork of red type having a security level higher than the network of black type, the first and second subnetworks of red type being interconnected via the network of black type by a secure tunnel between a first security gateway (121) of the first subnetwork of red type and a second security gateway (122) of the second subnetwork of red type which apply ciphering and deciphering operations such that each first packet with a smaller size than a second packet results after ciphering in a first ciphered packet with a size less than or equal to the size of the packet resulting from the ciphering of the second packet, **characterised in that**:
- the first application is adapted for transmitting (S302) to the second application a nominal sequence of packets, said packets of said nominal sequence being ordered in a predefined order according to their respective sizes, and said nominal sequence being such that it is possible to determine unambiguously on reception the size of each packet that would have been removed from said sequence;
- a network equipment item (113) of the network of black type on a mandatory path of said secure tunnel is adapted for routing to the third application each packet of said nominal sequence after ciphering by the first gateway;
- when the third application wishes to transmit said information to the first application and/or the second application, the third application is adapted for making (S406) modifications to said nominal sequence after ciphering by the first gateway, by deleting at least one packet, each deleted packet being dependent on said information, and for propagating (S407) the packets of said sequence after ciphering by the first gateway that have not been deleted;
- when the third application does not wish to transmit information to the first application and/or the second application, the third application is adapted for propagating (S403) the packets of said nominal sequence after ciphering by the first gateway;
- on reception (S501) of a sequence of packets supposed to be the nominal sequence of packets, the second application is adapted for checking (S502) whether at least one packet has been deleted by the third application; and,
- when the second application detects that at least one packet has been deleted by the third application, the second application is adapted for retrieving (S504) said information from the size of each thus deleted packet of said nominal sequence of packets.
